(19) Europäisches Patentamt
European Patent Office
Office européen des brevets

(11) **EP 1 362 246 B1**

(12) **FASCICULE DE BREVET EUROPEEN**

(45) Date de publication et mention
de la délivrance du brevet:
**04.05.2011 Bulletin 2011/18**

(21) Numéro de dépôt: **02805810.5**

(22) Date de dépôt: **26.12.2002**

(51) Int Cl.:
***G02B 1/11*** *(2006.01)*      ***G02B 5/28*** *(2006.01)*

(86) Numéro de dépôt international:
**PCT/FR2002/004567**

(87) Numéro de publication internationale:
**WO 2003/056366 (10.07.2003 Gazette 2003/28)**

(54) **ARTICLE D'OPTIQUE COMPORTANT UNE LAME QUART D'ONDE ET SON PROCEDE DE FABRICATION**

OPTISCHER ARTIKEL MIT EINER VIERTELWELLENLÄNGENPLATTE UND VERFAHREN ZU SEINER HERSTELLUNG

OPTICAL ARTICLE COMPRISING A QUARTER-WAVE PLATE AND METHOD FOR MAKING SAME

(84) Etats contractants désignés:
**AT BE BG CH CY CZ DE DK EE ES FI FR GB GR IE IT LI LU MC NL PT SE SI SK TR**

(30) Priorité: **27.12.2001 FR 0116952**

(43) Date de publication de la demande:
**19.11.2003 Bulletin 2003/47**

(73) Titulaire: **ESSILOR INTERNATIONAL COMPAGNIE GENERALE D'OPTIQUE 94227 Charenton cédex (FR)**

(72) Inventeurs:
• **CARON, Pierre**
  **F-75020 Paris (FR)**
• **CANO, Jean-Paul**
  **F-31650 Saint Orens (FR)**
• **CRETIER, Annette**
  **F-94200 Ivry sur Seine (FR)**

(74) Mandataire: **Catherine, Alain et al Cabinet HARLE et PHELIP 14-16, rue Ballu 75009 Paris (FR)**

(56) Documents cités:
EP-A- 0 445 686      EP-A- 0 962 789
EP-A- 1 089 093      US-A- 4 609 267
US-A- 5 476 717

**EP 1 362 246 B1**

**Description**

La présente invention concerne un article d'optique, par exemple une lentille ophtalmique, comprenant un substrat transparent en résine synthétique ou en verre minéral, en particulier ayant un indice de réfraction élevé ( $n_D^{25} =$ 1,5 ou plus, préférentiellement 1,55 ou plus), au moins un revêtement transparent tel qu'un revêtement anti-abrasion ou une couche de primaire et un revêtement anti-abrasion et une couche quart d'onde interposée entre le substrat et le revêtement transparent.

Il est classique de former sur les faces principales d'un substrat transparent en résine synthétique ou en verre minéral, telle qu'une lentille ophtalmique, un ou plusieurs revêtements pour conférer à l'article diverses propriétés avantageuses telles que résistance au choc, résistance à l'abrasion, élimination des reflets, etc...

Ainsi, généralement on revêt au moins une face du substrat soit directement avec une couche résistante à l'abrasion, soit avec une couche de primaire, généralement une couche améliorant la résistance au choc de la lentille, sur laquelle on peut déposer une couche résistante à l'abrasion, la couche de primaire améliorant l'ancrage de cette couche résistante à l'abrasion sur la face du substrat. Finalement, ont peut encore déposer sur la couche résistante à l'abrasion un revêtement anti-reflet.

En général, le substrat et la couche résistante à l'abrasion ou la couche de primaire ont des indices de réfraction différents et par suite, il apparaît des franges d'interférence dues à cette différence d'indices à l'interface entre le substrat et la couche résistante à l'abrasion ou la couche de primaire.

Le brevet US-4,609,267 décrit une lentille comprenant un substrat en résine synthétique d'indice de réfraction élevée (≥ 1,55) dont une face est revêtue d'une couche résistante à l'abrasion d'une substance diélectrique d'indice de réfraction différent de celui du substrat et qui, pour réduire la réflexion à l'interface entre le substrat et la couche résistante à l'abrasion comporte au moins une couche anti-réfléchissante d'une substance diélectrique ou métallique disposée entre le substrat et la couche résistante à l'abrasion.

La couche résistante à l'abrasion est une couche de $SiO_2$.

La couche anti-réfléchissante interposée constitue une lame quart d'onde et consiste soit en une seule couche d'un mélange de $SiO_2$ et d'oxyde d'aluminium, soit en deux couches, une première couche de $SiO_2$ et une seconde d'un matériau choisi parmi $ZrO_2$, $HfO_2$, $Ti_2O_3$, $TiO_2$, $Ta_2O_5$, $Si_3N_4$, $Yb_2O_3$, $Y_2O_3$ ou $Al_2O_3$.

Ces couches anti-réfléchissantes et résistantes à l'abrasion sont réalisées par évaporation sous vide.

Le brevet EP 0962789 décrit un film anti-reflets comprenant, dans son - expression la plus simple, un-support transparent, une couche à bas indice de réfraction et une surcouche de revêtement disposée sur la couche de bas indice de réfraction, ainsi qu'un dispositif d'affichage comprenant un tel film anti-réflecteur. La couche à bas indice de réfraction contient des micro-vides présents initialement à raison de 3 à 50 % du volume de cette couche. La surcouche de revêtement contient un composé fluoré qui ne doit pas envahir plus de 70 % du volume des micro-vides lors de son application. Ce brevet ne s'intéresse pas aux éventuels problèmes liés à l'apparition de franges d'interférence.

A l'heure actuelle, on utilise pour former les couches de primaire et de revêtement résistant à l'abrasion des vernis, c'est à dire des compositions conduisant à une matière en grande partie organique par opposition à des couches de nature essentiellement minérales telles que couches d'oxydes métalliques et/ou d'oxyde de silicium.

En outre, dans les processus industriels de fabrication des lentilles ophtalmiques, le dépôt de ces couches de vernis s'effectue par trempage dans un bain d'une solution ou dispersion du vernis ou par centrifugation d'une solution ou dispersion sur une face du substrat.

Si l'indice de réfraction du vernis et celui du substrat en verre organique ne sont pas accordés, c'est à dire si ces indices de réfraction sont notablement différents, il apparaît également un phénomène de franges d'interférence à l'interface entre le substrat et le vernis.

La présente invention a donc pour objet de fournir un article optique, telle qu'une, lentille ophtalmique, comprenant un substrat en verre organique ou minéral et au moins une couche de matériau polymère transparent, telle que, par exemple, une couche de primaire ou une couche de revêtement anti-abrasion dans lequel le phénomène de franges d'interférence lié à la différence d'indice de réfraction du substrat et de la couche de matériau polymère apparaissant à l'interface entre le substrat et la couche de matériau polymère soit notablement atténué. L'invention a également pour objet de fournir un article d'optique stable dans le temps et notamment résistant à la photodégradation.

La présente invention a encore pour objet un procédé de fabrication d'un article d'optique tel que défini ci-dessus qui s'intègre aisément dans le processus classique de fabrication et qui, en particulier, évite autant que possible la mise oeuvre de dépôts sous vide ou de toute autre étape de traitement constituant une rupture dans le processus de fabrication de l'article d'optique.

Les buts ci-dessus sont atteints selon l'invention par un article d'optique, par exemple une lentille ophtalmique et en particulier un verre de lunette, comprenant l'ensemble de caractéristiques de la revendication 1.

L'invention concerne également un procédé de fabrication d'un article d'optique tel que défini précédemment comprenant l'ensemble de caractéristiques de la revendication 24.

Généralement, la porosité initiale de la ou des couches intermédiaires, en l'absence de liant, est d'au moins 40 % en volume, par rapport au volume total de la ou des couches intermédiaires.

De préférence, la porosité en l'absence de liant de la couche ou des couches intermédiaires est d'au moins 50 % en volume.

Lorsque la ou les couches intermédiaires comprennent un liant, la porosité réelle de cette ou ces couches, c'est à dire la porosité restante en tenant compte du volume occupé par le liant, mais avant comblement par le matériau polymérique de la couche ultérieure est, de préférence, d'au moins 25 %, mieux d'au moins 30 % en volume par rapport au volume total de la couche intermédiaire.

Le support sur lequel on forme la couche intermédiaire peut être un substrat en verre organique ou minéral, de préférence en verre organique, telle qu'une lentille ophtalmique préformée ou ce peut être une surface principale de moulage d'une partie de moule comportant au moins un revêtement constituant la couche de matériau polymérique optiquement transparent destiné à être appliqué ou transféré sur un substrat en verre organique ou minéral.

Dans ce dernier cas, lorsque le substrat est en verre organique, il peut être formé in situ lors du transfert par coulée d'une composition polymérisable liquide dans le moule et polymérisation, et c'est alors du matériau du substrat qui assure le comblement de la porosité de la couche intermédiaire d'oxyde minéral.

La couche de matériau polymérique de comblement a une énergie de surface supérieure ou égale à 20 milli-Joules/m$^2$, de préférence supérieure ou égale à 25 milliJoules/m$^2$ et mieux supérieure ou égale à 30 milliJoules/m$^2$.

L'énergie de surface est calculée selon la méthode Owens-Wendt décrite dans la référence suivante : « Estimation of the surface force energy of polymers » Owens D.K., Wendt R.G. (1969), J. APPL. POLYM. SCI, 13, 1741-1747.

La composition conduisant au matériau polymérique de comblement comprend majoritairement un (ou des) composé(s) non fluoré(s).

De préférence, la composition conduisant au matériau polymérique de comblement comprend au moins 80% en poids de composés non fluorés par rapport au poids total des composés formant l'extrait sec (1) de ladite composition, mieux au moins 90% en poids, encore mieux au moins 95% en poids et tout préférentiellement 100% en poids.

Typiquement, le taux de fluor (en poids) dans le matériau polymérique de comblement est inférieur à 5% en poids, de préférence inférieur à 1% en poids et mieux de 0% en poids.

La porosité de la lame quart d'onde (après comblement) est préférentiellement inférieure à 5%, mieux inférieure à 3% et mieux encore de 0%.

Après comblement, le matériau de comblement vient en contact avec la surface du substrat (lorsque la matériau de comblement n'est pas celui du substrat mais d'une autre couche telle que la couche primaire ou antiabrasion) et permet d'obtenir l'adhérence de la lame quart d'onde sur le substrat.

Par extrait sec, on entend selon la présente invention la fraction pondérale de matières solides restantes après chauffage à 100°C pendant 15 minutes.

Lorsque la couche de matériau polymérique assurant le comblement de la porosité de la couche intermédiaire ne constitue pas le substrat, cette couche est généralement formée par dépôt au trempé ou par centrifugation, de préférence par centrifugation.

La suite de la description se réfère aux figures annexées qui représentent, respectivement:

Figure 1, une représentation schématique d'une réalisation d'un article d'optique comportant une lame quart d'onde selon l'invention ;

Figure 2, une représentation schématique d'une autre réalisation d'un article d'optique comportant une lame quart d'onde selon l'invention ;

Figure 3, une représentation schématique d'encore une autre réalisation d'un article d'optique selon l'invention ;

Figure 4, une représentation schématique d'un article d'optique comprenant deux lames quart d'onde selon l'invention ;

Figure 5, un organigramme d'un procédé de fabrication d'un article d'optique selon l'invention ;

Figure 6, une représentation schématique d'un premier mode de mise en oeuvre du procédé de fabrication d'un article d'optique selon l'invention ;

Figure 7, une représentation schématique d'un second mode de mise en oeuvre du procédé de fabrication d'un article d'optique selon l'invention ;

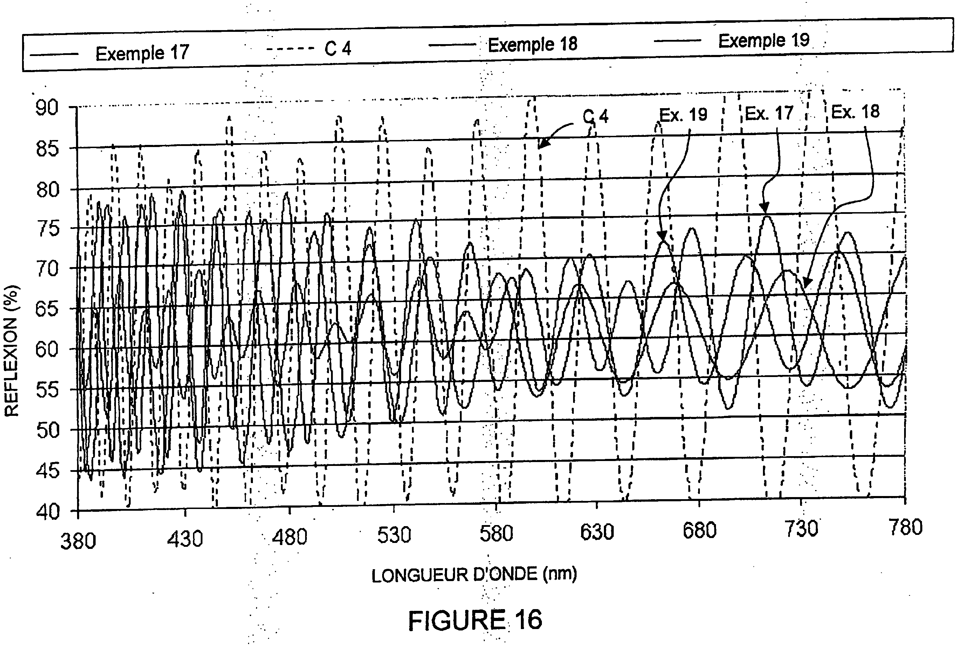

Figures 8 à 18 des graphes de la réflexion en fonction de la longueur d'onde d'articles d'optique conformes à l'invention et à titre de comparaison d'articles d'optique similaires ne comportant pas de couche intermédiaire quart d'onde ; et

Figure 19, une micrographie électronique de transmission d'un article d'optique selon l'invention.

Les caractéristiques optiques et géométriques d'une lame quart d'onde sont données par les relations suivantes :

$$n = (n_s \times n_v)^{\frac{1}{2}}$$

$$n.e = \lambda/4$$

où n est l'indice de réfraction à 25°C pour la longueur d'onde $\lambda$ = 550 nm de la lame quart d'onde (longueur d'onde correspondant à la sensibilité maximum de l'oeil) ;

$n_s$ est l'indice de réfraction à 25°C pour la longueur d'onde $\lambda$ = 550 nm du substrat ;

$n_v$ est l'indice de réfraction à 25°C pour la longueur d'onde $\lambda$ = 550 nm de la couche de matière polymérique directement en contact avec la lame quart d'onde.

En d'autres termes, l'indice n de la lame quart d'onde est la moyenne géométrique des indices des matériaux l'entourant.

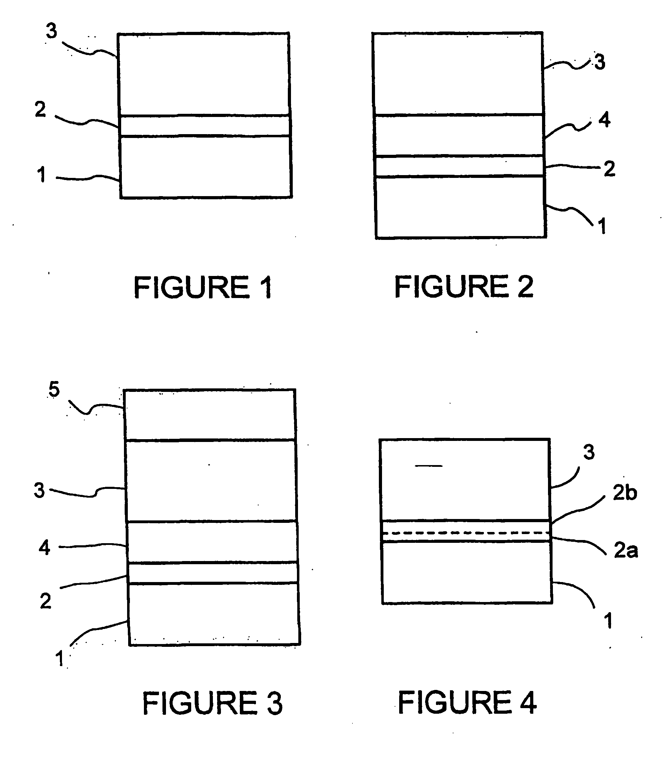

Sur la figure 1, on a présenté schématiquement un article d'optique selon l'invention qui comprend un substrat 1 optiquement transparent par exemple en verre organique. Une des faces principales du substrat 1 est revêtue d'une couche d'au moins un oxyde minéral colloïdal ayant une porosité initiale en l'absence de liant d'au moins 40 % en volume et d'épaisseur appropriée. Une couche d'un revêtement anti-abrasion 3 est formée sur la couche d'oxyde minéral colloïdal de manière à combler la porosité initiale, ou la porosité réelle lorsqu'un liant est présent, de la couche d'oxyde minéral colloïdal et réaliser la lame quart d'onde 2.

La figure 2 représente schématiquement un article d'optique qui diffère de l'article d'optique de la figure 1 en ce qu'on a interposé une couche d'un primaire anti-choc 4 entre la couche d'oxyde minéral colloïdal et la couche de revêtement anti-abrasion 3. Dans ce cas, la porosité initiale ou réelle de la couche d'oxyde est bien évidemment comblée par le matériau du primaire pour former la lame quart d'onde 2.

Connaissant les indices de réfraction du substrat $n_s$ et du revêtement anti-abrasion ou du primaire $n_v$ (par exemple, à 25°C et pour $\lambda$ = 550nm), les formules ci-dessus permettent de déterminer à priori l'épaisseur e et l'indice de réfraction n de la lame quart d'onde.

Ainsi, le tableau I ci-dessous donne les caractéristiques d'épaisseur et d'indice de réfraction des lames quart d'onde pour différents couples de substrat et de couches de revêtement anti-abrasion ou de primaire.

| Lame quart d'onde à 550 nm | SUBSTRATS | | | |
|---|---|---|---|---|
| | PC polycarbonate ($n_s$ =1,590) | MR6 (MITSUI) ($n_s$ = 1,595) | MR7 (MITSUI) ($n_s$ = 1,665) | 1.74 (MITSUI) ($n_s$ = 1,74) |
| Latex PU ($n_s$ = 1,500) Indice lame $\lambda/4$ | 1,544 | 1,547 | 1,580 | 1,615 |
| Epaisseur lame $\lambda/4$ | 89 nm | 89 nm | 87 nm | 85 nm |
| Epoxyalcoxysilane/silice ($n_v$ = 1,477) Indice lame $\lambda/4$ | 1,532 | 1,535 | 1,568 | 1,603 |
| Epaisseur lame $\lambda/4$ | 90 nm | 89 nm | 88 nm | 86 nm |

La figure 3 représente un article d'optique selon l'invention analogue à celui de la figure 2, mais comportant, en outre, un revêtement anti-reflet 5 formé sur le revêtement anti-abrasion 3.

La figure 4 représente un article d'optique qui ne correspond pas à l'invention, analogue à celui de la figure 1, mais comportant deux couches intermédiaires quart d'onde 2a, 2b. Bien évidemment, un tel empilement de deux couches intermédiaires peut également être réalisé avec les articles d'optique des figures 2 et 3.

Les substrats convenant pour les articles selon la présente invention peuvent être tout substrat optiquement transparent en verre minéral ou organique, de préférence en verre organique.

Parmi les matières plastiques convenant pour les substrats on peut citer les homo et copolymères de carbonate, (méth)acryliques, thio(méth)acryliques, de diéthylène glycol bisallylcarbonate tel que le matériau CR39® commercialisé par PPG, d'uréthane, de thiouréthane, d'époxyde, d'épisulfure et leur combinaisons.

Les matériaux préférés pour les substrats sont les polycarbonates (PC), les polyuréthanes (PU), les polythiouréthanes, les polymères (méth)acryliques et thio(méth)acryliques.

Généralement, les substrats ont un indice de réfraction $n_D^{25}$ variant de 1,55 à 1,80 et de préférence de 1,60 à 1,75.

La ou les couches intermédiaires 2 ou 2a, 2b comprennent au moins un oxyde minéral colloïdal généralement choisi parmi $SiO_2$, $TiO_2$, $ZrO_2$, $SnO_2$, $Sb_2O_3$, $Y_2O_3$, $Ta_2O_5$ et leurs mélanges. Les oxydes minéraux colloïdaux préférés sont $SiO_2$, $TiO_2$, $ZrO_2$ et les mélanges $SiO_2/TiO_2$ et $SiO_2/ZrO_2$.

Les silices colloïdales préférées sont les silices préparées par le procédé Stöber. Le procédé Stöber est un procédé simple et bien connu qui consiste en une hydrolyse et condensation du tétra silicate d'éthyle (Si $(OC_2H_5)_4$ ou TEOS) dans l'éthanol catalysées par de l'ammoniac. Le procédé permet d'obtenir une silice directement dans l'éthanol, une population de particules quasi monodispersée, une taille de particules réglable et une surface de particule ($SiO^-NH_4^+$).

Dans le cas d'un mélange d'oxydes minéraux colloïdaux, de préférence, le mélange comprend au moins un oxyde haut indice, c'est à dire ayant un indice de réfraction $n_D^{25} \geq 1,54$ et au moins un oxyde bas indice, c'est à dire ayant un indice de réfraction $n_D^{25} < 1,54$. De préférence, les mélanges d'oxydes minéraux sont des mélanges binaires, en particulier d'un oxyde bas indice et d'un oxyde haut indice. Généralement, le rapport pondéral oxyde bas indice /oxyde haut indice varie de 20/80 à 80/20, de préférence 30/70 à 70/30 et mieux de 40/60 à 60/40.

La taille des particules de l'oxyde minéral varie généralement de 10 à 80 nm, de préférence 30 à 80 nm et mieux de 30 à 60 nm.

En particulier, l'oxyde minéral peut être constitué d'un mélange de particules de petite taille, c'est à dire de 10 à 15 nm et de particules de grande taille, c'est à dire de 30 à 80 nm.

Typiquement, la couche 2 d'oxyde minéral colloïdal a une épaisseur de 60 à 100 nm, de préférence de 70 à 90 nm, et mieux de 80 à 90 nm, étant entendu que cette épaisseur doit être aussi proche que possible de l'épaisseur théorique d'une lame quart d'onde, compte tenu des matériaux utilisés pour l'article d'optique, pour un résultat optimal d'atténuation des franges d'interférence.

La couche d'oxyde minéral colloïdal peut éventuellement contenir, avant comblement par la couche de matériau polymérique, par exemple, de 1 à 30 % en poids d'au moins un liant par rapport au poids sec d'oxydes minéraux de la couche, et de préférence 10 à 25 % et mieux 10 à 20 % en poids.

Le liant est généralement un matériau polymère qui ne nuit pas aux propriétés optiques de la lame quart d'onde finale et qui accroît la cohésion et l'adhérence des particules d'oxydes minéraux à la surface du substrat.

Les liants sont généralement des matériaux analogues aux compositions de primaire anti-choc décrits ci-après.

Les liants préférés sont les latex de polyuréthane et les latex (méth)acryliques, tout particulièrement les latex de polyuréthane.

Comme indiqué précédemment, la couche intermédiaire d'oxyde minéral colloïdal a une porosité d'au moins 40 % en volume et de préférence de l'ordre de 50 % en volume par rapport au volume total de la couche, en l'absence de liant , et avant comblement par le matériau polymérique de la couché de primaire ou de revêtement anti-abrasion.

La couche de primaire, lorsqu'elle est présente, peut être toute couche de primaire classiquement utilisé dans le domaine optique et en particulier ophtalmique.

Typiquement, ces primaires, en particulier les primaires anti-choc, sont des revêtements à base de polymère (méth)acryliques, de polyuréthanes, de polyester, ou encore à base de copolymères époxy/(méth)acrylate.

Les revêtements anti-chocs à base de polymère (méth) acrylique sont, entre autres, décrits dans les brevets US 5,015,523 et US 5,619,288, cependant que des revêtements à base de résines de polyuréthane thermoplastiques et réticulées sont décrits, entre autres, dans les brevets japonais 63-1411001 et 63-87223, le brevet européen EP-040411 et le brevet US-5,316,791.

En particulier, le revêtement de primaire résistant au choc de l'invention peut être réalisé à partir d'un latex poly(méth)acrylique, y compris de type coque-noyau (core-shell) tel que décrit, par exemple, dans la demande de brevet français FR 2.790.317, d'un latex de polyuréthane ou d'un latex de polyester.

Parmi les compositions de revêtement de primaire anti-choc particulièrement préféré, on peut citer le latex acrylique commercialisé sous la dénomination A-639 par Zeneca et les latex de polyuréthane commercialisés sous les dénominations W-240 et W-234 par la Société Baxenden.

On choisira de préférence des latex ayant une taille de particule ≤ 50 nm et mieux ≤ 20nm.

Généralement, après durcissement, la couche de primaire résistant au choc a une épaisseur de 0,05 à 20 $\mu$m, de préférence de 0,5 à 10 $\mu$m et mieux encore de 0,6 à 6 $\mu$m. L'épaisseur optimale est généralement de 0,5 à 2 $\mu$m.

Le revêtement anti-abrasion peut être tout revêtement anti-abrasion classiquement utilisé dans le domaine de l'optique et en particulier de l'optique ophtalmique.

Par définition, un revêtement anti-abrasion est un revêtement qui améliore la résistance à l'abrasion de l'article d'optique fini comparé au même article ne comportant pas le revêtement anti-abrasion.

Les revêtements anti-abrasion préférés sont ceux obtenus par durcissement d'une composition renfermant un ou plusieurs alcoxysilane(s) (préférentiellement un ou plusieurs époxyalkoxysilane(s)) ou un hydrolysat de ceux-ci, et préférentiellement une charge colloïdale minérale, telle qu'une charge d'oxyde colloïdal.

Selon un aspect particulier, les revêtements anti-abrasion préférés sont ceux obtenus par durcissement d'une composition incluant un ou plusieurs époxyalcoxysilanes ou un hydrolysat de ceux-ci, de la silice et un catalyseur de durcissement. Des exemples de telles compositions sont décrits dans la demande internationale WO 94/10230 et les brevets US 4,211,823, 5,015,523, ainsi que le brevet européen EP 614957.

Les compositions de revêtement anti-abrasion particulièrement préférés sont celles comprenant comme constituants principaux un époxyalcoxysilane tel que, par exemple, le γ-glycidoxypropyltriméthoxysilane (GLYMO), un dialkyldialcoxysilane tel que, par exemple, le diméthyldiéthoxysilane (DMDES), de la silice colloïdale et une quantité catalytique d'un catalyseur de durcissement tel que l'acétylacétonate d'aluminium ou un hydrolysat de ces constituants, le reste de la composition étant essentiellement constitué de solvants classiquement utilisés pour formuler ces compositions et éventuellement d'un ou plusieurs agents tensioactifs.

Pour améliorer l'adhérence du revêtement anti-abrasion, la composition de revêtement anti-abrasion peut éventuellement comporter une quantité effective d'un agent de couplage, en particulier lorsque le substrat revêtu est fabriqué par la technique de coulée dans le moule (In Mold Casting ou IMC).

Cet agent de couplage est typiquement une solution pré-condensée d'un époxyalcoxysilane et d'un alcoxysilane insaturé, de préférence comprenant une double liaison éthylénique terminale.

Des exemples d'époxyalcoxysilanes sont :

le γ-glycidoxypropyltriméthoxysilane,
le γ-glycidoxypropylpentaméthyldisiloxane,
le γ-glycidoxypropylméthyldiisopropènoxysilane,
le (γ-glycidoxypropyl)méthyldiéthoxysilane,
le γ-glycidoxypropyldiméthoxyéthoxysilane,
le γ-glycidoxypropyldiisopropyléthoxysilane et le
(γ-glycidoxypropyl)bis(triméthylsiloxy)méthylsilane.

L'époxyalcoxysilane préféré est le
(γ-glycidoxypropyl)triméthoxysilane.

L'alcoxysilane insaturé peut être un vinylsilane, un allylsilane, un silane acrylique ou méthacrylique.

Des exemples de vinylsilanes sont :

le vinyltris(2-méthoxyéthoxy)silane,
le vinyltris isobutoxysilane,
le vinyltri-t-butoxysilane,
le vinyltriphénoxysilane,
le vinyltriméthoxysilane,
le vinyltri isopropoxysilane,
le vinyltriéthoxysilane,
le vinyltriacétoxysilane,
le vinylinéthyldiéthoxysilane,
le vinylméthyldiacétoxysilane,
le vinyl bis(triméthylsiloxy)silane et le vinyldiméthoxysilane.

Des exemples d'allylsilanes sont l'allyltriméthoxysilane, l'allyltriéthoxysilane et l'allyltris(triméthylsiloxy)silane.

Des exemples de silanes acryliques sont :

le 3-acryloxypropyltris(triméthylsiloxy)silane,
le 3-acryloxypropyltriméthoxysilane,
l'acryloxypropylméthyl-diméthoxysilane,
le 3-acryloxypropylméthylbis(triméthylsiloxy)silane,
le 3-acryloxypropyldiméthylméthoxysilane,
le n-(3-acryloxy-2-hydroxypropyl)-3-aminopropyltriéthoxysilane.

Des exemples de silanes méthacryliques sont :

le 3-méthacryloxypropyltris(vinyldiméthoxylsiloxy)silane,
le 3-méthacryloxypropyltris(triméthylsiloxy)silane,
le 3-méthacryloxypropyltris(méthoxyéthoxy)silane,
le 3-méthacryloxypropyltriméthoxysilane,
le 3-méthacryloxypropylpentaméthyl disiloxane,

le 3-méthacryloxypropylméthyldiméthoxysilane,
le 3-méthacryloxypropylméthyldiéthoxysilane,
le 3-méthacryloxypropyldiméthyl méthoxysilane,
le 3-méthacryloxypropyldiméthyléthoxysilane,
le 3-méthacryloxypropènyltriméthoxysilane,
et le 3-méthacryloxypropylbis(triméthylsiloxy)méthylsilane.

Le silane préféré est l'acryloxypropyltriméthoxysilane.

Typiquement, la quantité d'agent de couplage introduite dans la composition de revêtement anti-abrasion représente 0,1 à 15 % en poids du poids total de la composition de préférence 1 à 10 % en poids.

L'épaisseur du revêtement anti-abrasion, après durcissement, est habituellement de 1 à 15 $\mu$m, de préférence de 2 à 6 $\mu$m.

Les compositions de primaire anti-choc et de revêtement anti-abrasion peuvent être durcies thermiquement et/ou par irradiation, de préférence thermiquement.

Bien évidemment comme indiqué précédemment, le matériau de la couche de primaire ou de la couche de revêtement anti-abrasion doit pénétrer et combler la porosité de la couche intermédiaire d'oxyde minéral colloïdal.

Comme on le verra ci-après, les couches de primaire anti-choc et de revêtement anti-abrasion sont de préférence formées par dépôt au trempé ou par centrifugation. De ce fait, les compositions pour la formation de ces couches sont de préférence des compositions sol-gel.

L'article d'optique selon l'invention peut comporter éventuellement un revêtement anti-reflets formé sur la couche de revêtement anti-abrasion.

Le revêtement anti-reflets peut être tout revêtement anti-reflets classiquement utilisé dans le domaine de l'optique, en particulier de l'optique ophtalmique.

A titre d'exemple, le revêtement anti-reflets peut être constitué d'un film mono- ou multicouche, de matériaux diélectriques tels que SiO, SiO$_2$ Si$_3$N$_4$, TiO$_2$, ZrO$_2$, Al$_2$O$_3$, MgF$_2$ ou Ta$_2$O$_5$, ou leurs mélanges.

Il devient ainsi possible d'empêcher l'apparition d'une réflexion à l'interface lentille-air.

Ce revêtement anti-reflets est appliqué généralement par dépôt sous vide selon l'une des techniques suivantes :

Par évaporation, éventuellement assistée par faisceau ionique.

Par pulvérisation par faisceau d'ion.

Par pulvérisation cathodique.

Par dépôt chimique en phase vapeur assistée par plasma.

Outre le dépôt sous vide, on peut aussi envisager un dépôt d'une couche minérale par voie sol-gel (par exemple à partir d'hydrolysat de tétraéthoxysilane).

Dans le cas où la pellicule comprend une seule couche, son épaisseur optique doit être égale à $\lambda/4$ ($\lambda$ est une longueur d'onde comprise entre 450 et 650 nm).

Dans le cas d'un film multicouche comportant trois couches, on peut utiliser une combinaison correspondant à des épaisseurs optiques respectives $\lambda/4$, $\lambda/2$, $\lambda/4$ ou $\lambda/4$, $\lambda/4$, $\lambda/4$.

On peut en outre utiliser un film équivalent formé par plus de couches, à la place d'un nombre quelconque des couches faisant partie des trois couches précitées.

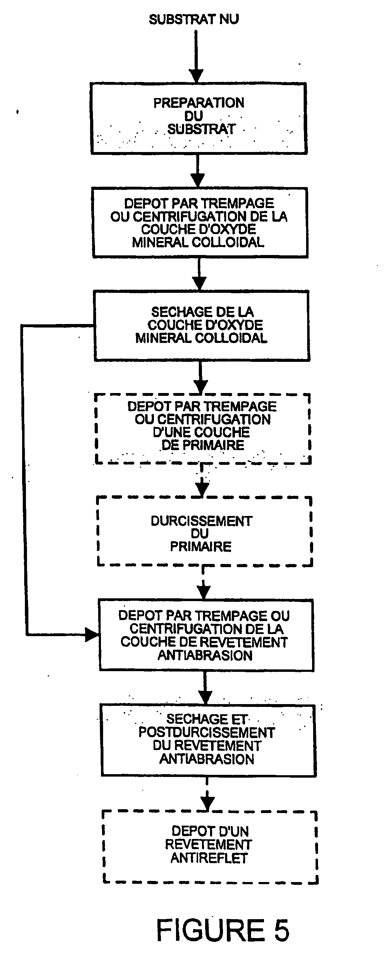

La figure 5 est un schéma synoptique des principales étapes d'un procédé de réalisation d'un article d'optique selon la présente invention.

La surface du substrat nu en verre organique ou minéral, par exemple une lentille ophtalmique, est tout d'abord traitée par trempage dans une solution de soude à 5 % à chaud, par exemple à 50°C (3 minutes), puis rinçage à l'eau et à l'alcool.

On procède ensuite par trempage dans un sol d'oxyde minéral colloïdal ou centrifugation du sol, de préférence par trempage, au revêtement de la surface traitée du substrat par une couche d'oxyde minéral colloïdal.

Dans le cas du dépôt par trempage, l'épaisseur déposée est fonction de la teneur en matière sèche du sol, de la taille des particules et de la vitesse de démouillage (Loi de Landau-Levich). Ainsi, connaissant la composition du sol, la taille des particules, les indices de réfraction du substrat et du revêtement primaire ou anti-abrasion, on peut déterminer l'épaisseur voulue pour la couche d'oxyde minéral colloïdal et la vitesse de démouillage convenant pour l'obtention de l'épaisseur voulue.

Après séchage de la couche déposée, on obtient une couche d'oxyde minéral colloïdal poreuse d'épaisseur voulue. La porosité de la couche est un critère essentiel et doit être d'au moins 40 % en volume, de préférence d'au moins 50 % en volume en l'absence de liant et d'au moins 25 %, de préférence d'au moins 30 % en volume, en présence de liant. La porosité des couches peut être calculée à partir des indices de réfraction des couches mesurées par ellipsométrie.

Le séchage de la couche après dépôt peut être effectué à une température variant de 20 à 130°C, préférentiellement 20°C-120°C.

Préférentiellement, le séchage est effectué à température ambiante (20-25°C).

Dans le cas d'une couche ne contenant pas de liant

La porosité de la couche d'oxyde minéral colloïdal poreuse est

$$p = \frac{Vp}{Vc + Vp}$$

où Vp est le volume des pores contenus dans la couche,
et Vc est le volume occupé par l'oxyde minéral dans la couche.
La porosité p de la couche est ici égale à la porosité en l'absence de liant.
On accède à la valeur de la porosité p à partir des indices de réfraction:

- n (mesuré par ellipsométrie) qui est l'indice de réfraction de la couche minérale poreuse,
- $n_c$ qui est l'indice de réfraction moyen des particules d'oxyde minéral (éventuellement mixtes si plusieurs oxydes sont utilisés).

et de la relation :

$$n^2 = p + n_c^2 \ (1-p)$$

où p est la fraction volumique en pore, en supposant les pores remplis d'air et 1-p la fraction volumique d'oxyde minéral.
Les indices de réfraction sont déterminés à 25°C à la longueur d'onde de 632 nm.

Dans le cas d'une couche contenant un liant

La porosité p de la couche est calculée à partir des relations suivantes :

$$(1) \ n^2 = p + x_c \ n_c^2 + x_1 \ n_\lambda^2$$

où n est l'indice de réfraction de la couche d'oxyde minéral poreux,

$p$, porosité de la couche $= \dfrac{Vp}{V \ total}$ ,

$x_c$ représente la fraction volumique d'oxyde minéral dans la couche

$$x_c = \frac{Vc}{V \ total} \ ,$$

$x_1$ représente la fraction volumique de liant dans la couche

$$x_1 = \frac{V\lambda}{V \ total} \ ,$$

Vp, Vc, Vl, Vtotal représentent respectivement les volumes occupés par les pores (air), l'oxyde minéral, le liant et par la totalité de la couche,

n$_c$ est l'indice de réfraction moyen des particules d'oxyde minéral,
nl est l'indice de réfraction du liant,

$$(2)\ p + x_1 + x_c = 1$$

$$(3)\ \frac{x_\lambda}{x_c} = \frac{m_\lambda}{m_c}\ x\ \left(\frac{dc}{dl}\right)$$

dc = densité de l'oxyde minéral,
dl = densité du liant,
m$_l$ = masse sèche du liant dans la couche,
m$_c$ = masse sèche d'oxyde minéral dans la couche.

La porosité en l'absence de liant est par définition p' = p + x$_l$, c'est à dire la porosité que présenterait la couche si le volume de liant était occupé par de l'air.

On obtient les valeurs de p et de p' par mesure de n, par ellipsométrie, les indices n$_c$ et n$_l$ étant connus par ailleurs et le ratio $\frac{m_\lambda}{m_c}$ étant fixé expérimentalement.

Les différents indices de réfraction sont déterminés à 25°C à la longueur d'onde de 632 nm.

Dans une première réalisation du procédé, le matériau du revêtement anti-abrasion est alors déposé par trempage (ou centrifugation) puis séché, par exemple dans un four à 75°C pendant environ 210 secondes et enfin post-durci, par exemple à 100°C pendant 3 heures, pour obtenir l'article selon l'invention.

En variante, après la formation de la couche d'oxyde minéral poreuse, on dépose par trempage (ou centrifugation) une couche de composition de primaire anti-choc et on sèche, par exemple dans un four à 85°C, puis on procède au dépôt du revêtement anti-abrasion comme ci-dessus.

Enfin facultativement on peut procéder de manière classique au dépôt d'un revêtement anti-reflets sur le revêtement anti-abrasion.

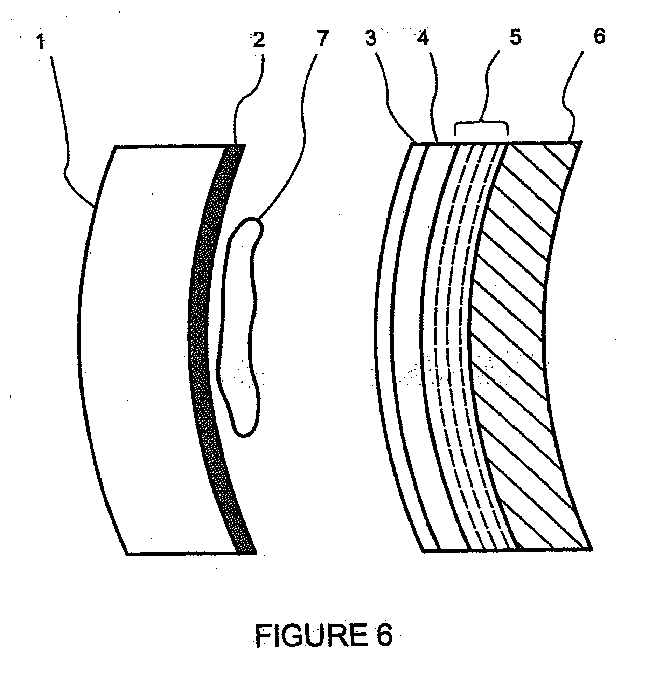

La figure 6 est une représentation schématique de la formation d'une couche quart d'onde selon l'invention par transfert sur une préforme.

Comme le montre la figure 6, on forme, de préférence par dépôt centrifuge ou en trempé sur une face d'une préforme 1, de préférence en verre organique, une couche intermédiaire 2 d'oxyde minéral colloïdal contenant éventuellement un liant.

Sur une surface d'un moule 6, de préférence un moule flexible, on forme, dans l'ordre, une couche de revêtement anti-reflet classique 5, une couche de revêtement dur anti-abrasion 4 et une couche de primaire 3. De préférence, les couches de revêtement anti-reflet 5, anti-abrasion 4 et de primaire 3 sont séchées et/ou durcies , au moins partiellement.

On place alors une quantité adéquate d'un matériau adhésif, soit sur la couche intermédiaire 2, soit sur la surface de la couche de primaire 3, de préférence la couche intermédiaire 2, puis on presse la préforme 1 portant la couche intermédiaire 2 contre l'ensemble des couches 3, 4 et 5 portées par le moule 6.

Après durcissement de l'adhésif, on retire le moule 6 pour obtenir une lentille selon l'invention.

La porosité de la couche intermédiaire 2 est alors comblée par l'adhésif 7 qui constitue la couche de matériau polymérique en contact direct avec la couche intermédiaire 2.

Dans ce cas, la couche d'adhésif 7 assure l'adhérence de l'empilement 3, 4 , 5 avec la couche intermédiaire 2, elle-même en liaison avec le substrat 1.

Cet adhésif 7 peut être déposé sur la couche intermédiaire 2 portée par la préforme 1 par dépôt de type centrifugation ou au trempé ou sur la dernière couche de l'empilement ou bien encore injecté entre la préforme 1 portant la couche intermédiaire 2 et l'empilement porté par le moule flexible 6.

Le dépôt de l'adhésif sur la couche intermédiaire 2 portée par la préforme 1 est un mode de réalisation préféré.

De préférence, l'adhésif 7 est un matériau organique durcissable par irradiation, par exemple par irradiation avec un rayonnement UV.

Si la viscosité de l'adhésif 7 est élevée, il est possible de chauffer celui-ci de façon à diminuer la viscosité et à permettre une pénétration, et donc un comblement optimal de la couche intermédiaire 2. La température de chauffage ne doit pas être trop élevée afin d'éviter la dégradation thermique de l'empilement anti-reflets 5.

La couche ¼ d'onde 2 formée évite les franges d'interférence, tout particulièrement lorsque la différence d'indice de réfraction entre le substrat 1 et le matériau constituant l'adhésif 7 est élevé. (Dans le cas le plus fréquent, c'est le substrat 1 qui présente un indice de réfraction élevé et l'adhésif 7 qui possède un bas indice de réfraction).

La couche adjacente 4 supérieure à la couche d'adhésif 7 formée est généralement une couche de primaire anti-chocs.

On peut cependant envisager le cas où la composition du matériau constituant l'adhésif 7 est elle-même formulée de façon à présenter des propriétés anti-chocs.

Dans ce cas, la couche d'adhésif 7 joue également le rôle de primaire anti-chocs et est alors directement adjacente à la couche de revêtement anti-abrasion 4.

Un tel adhésif 7 peut être constitué du matériau décrit dans le brevet US 5,619,288 (acrylates durcissables aux UV).

Sur la figure 6, la couche ¼ d'onde 2 est réalisée en face arrière de la préforme. Elle pourrait toutefois être réalisée de la même façon en face avant.

Cependant, pour la face avant, on préfère réaliser la couche ¼ d'onde 2 suivant le procédé décrit en liaison avec la figure 5.

Le moule 6 peut être rigide ou flexible, mais est de préférence flexible.

L'utilisation d'un moule rigide n'est pas recommandée car elle nécessite un grand nombre de moules ayant chacun une surface de géométrie définie pour correspondre à celle de la préforme.

Au contraire, lorsqu'on utilise un moule flexible, il suffit d'avoir un seul moule ayant une surface dont la géométrie se conforme de manière générale à celle de la surface de la préforme, c'est à dire une forme convexe ou concave, sur laquelle s'effectue le transfert .

Le moule peut être en tout matériau approprié, en particulier en une matière plastique par exemple en polycarbonate.

Le moule flexible a typiquement une épaisseur de 0,3 à 5 mm. De préférence, il est en polycarbonate et a une épaisseur de 0,5 à 1 mm.

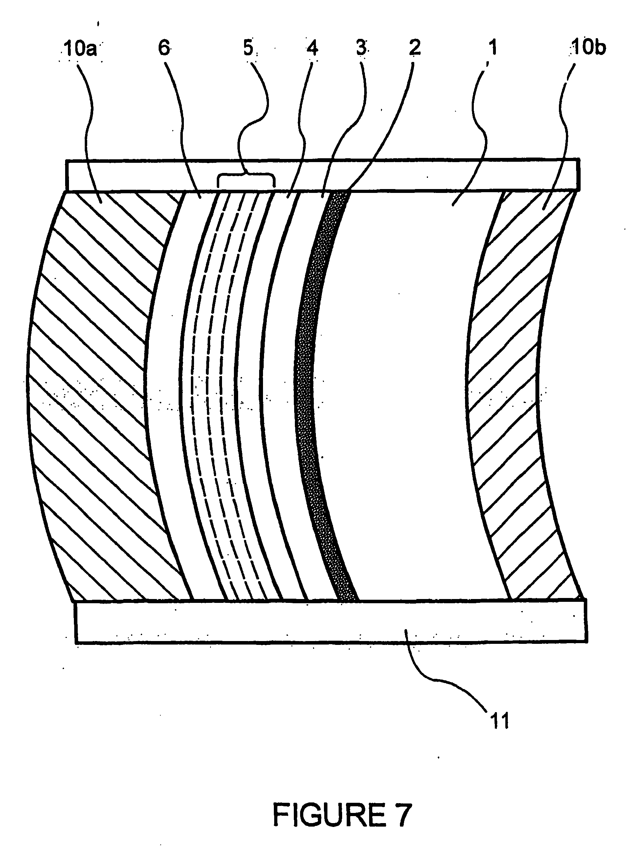

La figure 7 est une représentation schématique de la formation d'une couche quart d'onde selon l'invention par le procédé dit IMC.

Sur une surface appropriée d'une première partie de moule 10a d'un moule en deux parties classique pour la fabrication d'une lentille ophtalmique, on forme successivement dans l'ordre indiqué, de manière classique, un revêtement supérieur à propriétés hydrophobes 6, un revêtement anti-reflet multicouches 5, un revêtement dur anti-abrasion 4 et une couche de primaire anti-choc 3.

Sur la surface de la couche de primaire 3, on forme , de préférence par dépôt par centrifugation ou au trempé, une couche intermédiaire d'oxyde minéral colloïdal d'épaisseur et de porosité requises.

Après assemblage des deux parties du moule 10a 10b au moyen d'un joint adhésif 11, on injecte dans la cavité du moule une composition de monomères liquides.

Après durcissement de la composition de monomère pour former le substrat 1 et le démoulage, on obtient un article selon l'invention.

Dans ce cas, la porosité de la couche intermédiaire 2 est comblée par le matériau constituant le substrat 1.

Les compositions de monomères convenant sont toutes compositions classiquement utilisées pour la réalisation d'articles d'optique, en particulier de lentilles ophtalmiques.

Sur la figure 7, les différentes couches sont formées sur la face avant de l'article, mais pourraient être formées de la même façon sur les deux faces du verre final.

Dans les exemples suivants, sauf indication contraire, tous les pourcentages et parties sont exprimées en poids.

Les ratios de colloïdes dans les différents exemples sont exprimés en poids de matière sèche.

Les matériaux utilisés dans les exemples sont les suivants :

1) <u>Substrat :</u>

- Polycarbonate (PC) : homopolycarbonate de bisphénol-A commercialisé par Teijin ou General Electric,

- Polythiouréthane thermodurcissable - indice $n_D^{25} = 1,6$ : MR6 commercialisé par MITSUI

- Polythiouréthane thermodurcissable - indice $n_D^{25} = 1,67$ : MR7 commercialisé par MITSUI

- Polyépisulfure - indice $n_D^{25} = 1,74$ : commercialisé par MITSUI

- Verre minéral : Stigmal blanc Essilor - indice $n_D^- = 1,807$

2) Oxyde minéral colloïdal :

| Silice - $SiO_2$ | Indice moyen de réfraction des particules $n_c$ | Diamètre des particules (nm) | pH |
|---|---|---|---|
| MA-ST (Nissan) | 1,48 | 10 - 12 | 3 - 4 |
| Stöber 176 | 1,48 | 74 | 6,5 |
| Stöber 229 | 1,48 | 71 | 6,5 |
| Ludox AS30 (Dupont) | 1,48 | 13 - 14 | 9,6 |

| Dioxyde de titane $TiO_2$ | Indice moyen de réfraction des particules $n_c$ | Diamètre des particules (nm) | pH |
|---|---|---|---|
| 1130 F2 (CCIC) | 2,05 | 7 - 15 | 4 - 6 |
| 1120 ZS 95A8 (CCIC) | 1,92 | 6 - 10 | 3 - 6 |

| Zircone - $ZrO_2$ | Indice moyen de réfraction des particules $n_c$ | Diamètre des particules (nm) | pH |
|---|---|---|---|
| ZSL20N DAICHI KIGENSO | 2 | ~ 50 nm | 3 |

3) Primaire :

- Latex de polyuréthane W 234 de Baxenden
- Latex acrylate de butyle/méthylméthacrylate (ABu/MMA) décrit dans la demande de brevet FR 2790317.

4) Revêtement anti-abrasion :

La composition de revêtement anti-abrasion est préparée en ajoutant goutte à goutte 42,9 parties d'acide chlorhydrique 0,1 N à une solution contenant 135,7 parties de γ-glycidoxypropyltriéthoxysilane (GLYMO) et 49 parties de diméthyldiéthoxysilane (DMDES).

La solution hydrolysée est agitée pendant 24 heures à température ambiante et on ajoute alors 8,8 parties d'acétylacétonate d'aluminium, 26,5 parties d'éthylcellulose, 400 parties de silice colloïdale à 30 % dans le méthanol et 157 parties de méthanol.

On ajoute alors une petite quantité de tensio-actif. L'extrait sec théorique de la composition renferme de l'ordre de 10 % en matière solide provenant du DMDES hydrolysé.

5) Revêtement anti-reflets :

Le revêtement anti-reflets, lorsqu'il est présent, est formé par dépôt sous vide classique des couches successives suivantes :

| | Matériau | Epaisseur optique (nm) |
|---|---|---|
| Première couche déposée | $ZrO_2$ | 55 |
| Deuxième couche déposée | $SiO_2$ | 30 |
| Troisième couche déposée | $ZrO_2$ | 160 |
| Quatrième couche déposée (couche supérieure) | $SiO_2$ | 120 |

Les épaisseurs optiques sont données pour $\lambda$ = 550 nm

Dans tous les exemples, les porosités indiquées p ou p' sont des porosités initiales avant comblement.

**EXEMPLE 1 et EXEMPLES COMPARATIFS C1 et C2**

On forme sur une surface d'un substrat polythiouréthane MR6, préalablement traitée par une solution de soude comme décrit précédemment, par trempage dans une solution à 3 % dans le méthanol d'un mélange 70/30 en poids de silice (MA-ST) et de $TiO_2$ (1130F2), une couche d'oxyde minéral colloïdale. Après séchage, les caractéristiques de la couche d'oxyde minérale sont :

- épaisseur : 63 nm
- indice de réfraction n = 1,385
- porosité p = 42 %

On forme alors successivement, par dépôt au trempé, dans les conditions indiquées ci-dessus, une couche de primaire antichoc (W234) et une couche de revêtement anti-abrasion.

L'épaisseur de la couche de primaire est de l'ordre de 1 $\mu$m et celle du revêtement anti-abrasion de l'ordre de 3,5 $\mu$m (exemple 1).

A titre comparatif, on forme également sur une surface de deux substrats MR6, par dépôt au trempé et dans les mêmes conditions, une couche d'un revêtement dur anti-abrasion (polysiloxane) d'indice de réfraction 1,6 adapté à celui du substrat (exemple comparatif C1) d'une part, et un empilement d'une couche de primaire et d'un revêtement dur anti-abrasion analogue à celui de l'exemple 1 (exemple comparatif C2).

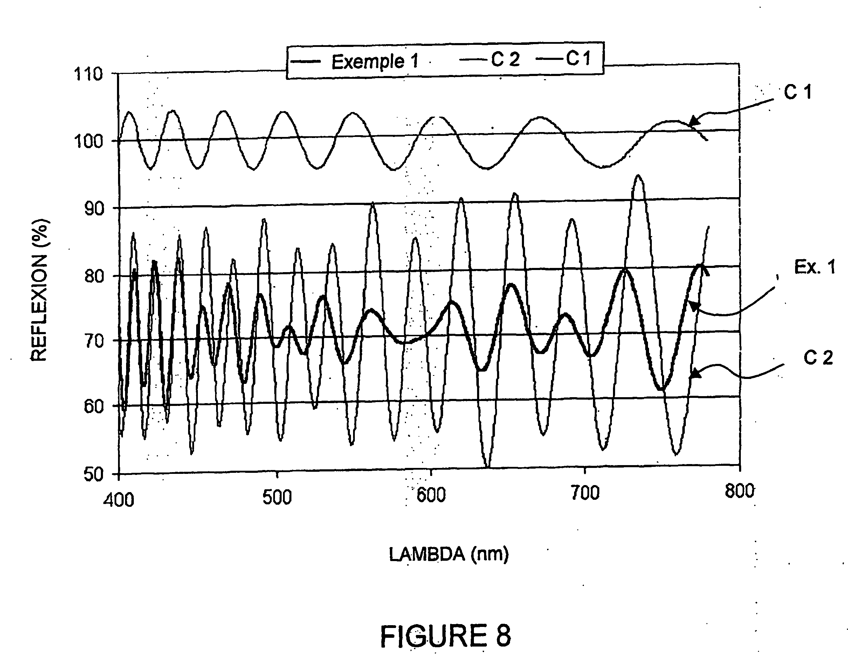

Les graphes de la figure 8 sont des graphes de la réflexion en fonction de la longueur d'onde des substrats revêtus.

On voit que le niveau moyen de réflexion du système à indices adaptés (C1) est plus élevé que celui des systèmes non adaptés (exemple 1 et C2).

On remarque également que l'amplitude des cannelures est fortement diminuée dans le système de l'exemple 1 (lame quart d'onde interposée) par rapport au système de l'exemple comparatif C2.

**EXEMPLES 2 à 4 et EXEMPLE COMPARATIF C3**

On répète l'exemple 1, mais en utilisant un substrat en polycarbonate Texan® (General Electric) et les sols d'oxyde minéral colloïdal suivants :

| Exemple n° | Sol d'oxyde minéral |
|---|---|
| 2 | $SiO_2$ MA-ST / $TiO_2$ Z 1130F 70/30 à 3 % dans MeOH |
| 3 | $SiO_2$ Ludox AS 30 / $TiO_2$ Z 1130F 70/30 à 3 % dans EtOH |
| 4 | $SiO_2$ MA-ST / $TiO_2$ Z 1120 ZS 95A8 50/50 à 3 % dans MeOH |

Les épaisseurs, indices et porosités des couches d'oxyde minéral obtenues sont les suivants :

| Exemple n° | Epaisseur couche d'oxyde minéral (nm) | Indice n | Porosité p |
|---|---|---|---|
| 2 | 63 | 1,385 | 42 % |
| 3 | 65 | 1,375 | 43% |
| 4 | 62 | 1,329 | 52 % |

A titre comparatif (exemple comparatif C3), on a formé directement sur un substrat analogue en polycarbonate des couches de primaire et de revêtement anti-abrasion semblables à celles de l'exemple 1 (primaire PU W 234 de Baxenden et revêtement anti-abrasion défini ci-dessus).

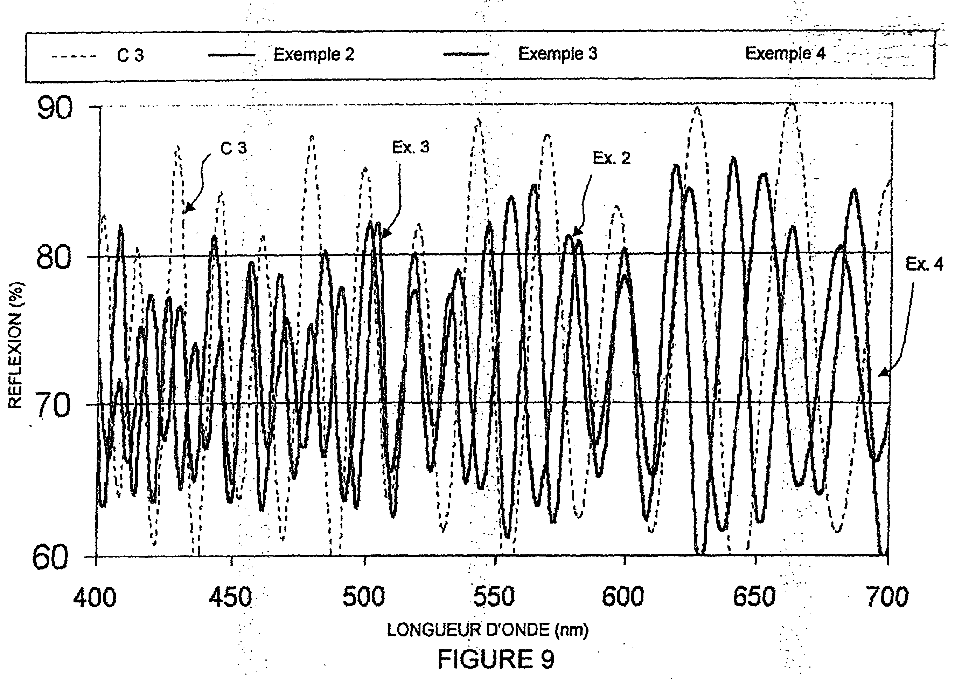

Les résultats de la réflexion en fonction de la longueur d'onde sont représentés par le graphe de la figure 9.

## EXEMPLES 5 à 7

On répète l'exemple 2, mais en incorporant au sol d'oxyde minéral un liant dans une quantité telle que l'extrait sec du sol renferme 10 %, 20 % et 30 % de liant. Le liant utilisé est le latex PU W-234 de Baxenden et le pourcentage de liant incorporé est exprimé en poids par rapport au poids total sec d'oxyde minéral du sol. Les compositions des sols et les épaisseurs des couches d'oxyde minéral obtenues sont données dans le tableau ci-dessous :

| Exemple n° | Sol d'oxyde minéral | | Epaisseur de la couche d'oxyde minéral (nm) | Indice de réfraction n | Porosité (%) P | Porosité (%) p' |
|---|---|---|---|---|---|---|
| | Oxyde minéral | Liant (%)* | | | | |
| 5 | $SiO_2$ MA-ST / $TiO_2$ 1130F2 70/30 à 2 % dans EtOH | 10 | 67 | 1,343 | 46 | 57 |
| 6 | $SiO_2$ MA-ST / $TiO_2$ 1130F2 70/30 à 1,6% dans EtOH | 20 | 74 | 1,378 | 38 | 59 |
| 7 | $SiO_2$ MA-ST / $TiO_2$ 1130F2 70/30 à 1,5% dans EtOH | 30 | 60 | 1,412 | 28 | 59 |
| * Latex PU W234 en pourcentage par rapport au poids d'oxyde minéral. | | | | | | |

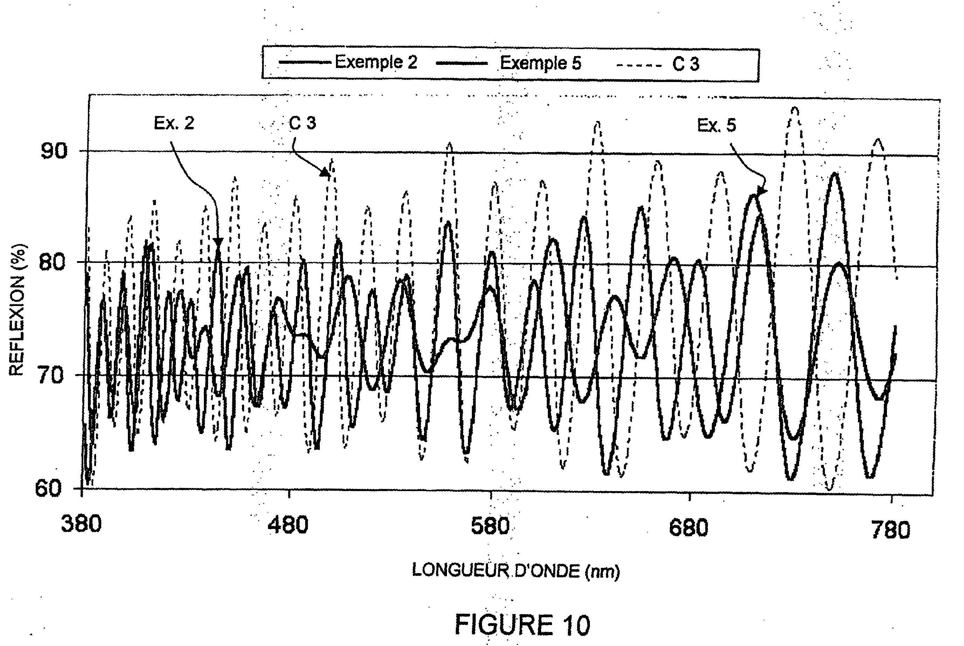

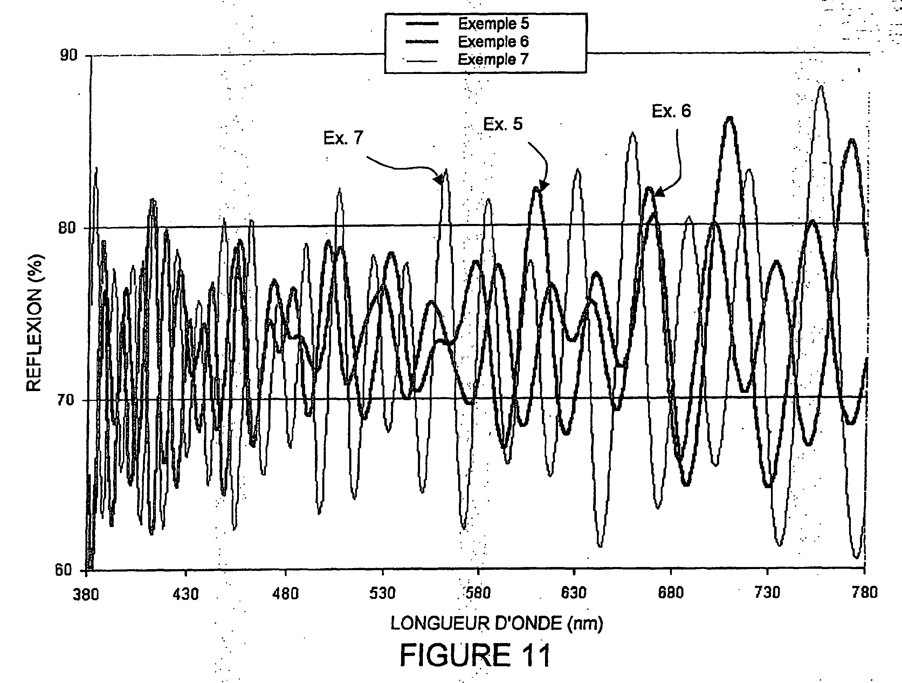

Les résultats de réflexion en fonction de la longueur d'onde sont donnés par les graphes des figures 10 et 11.

Sur la figure 10, les résultats de réflexion de l'exemple 5 sont directement comparés à ceux de l'exemple comparatif C3 et de l'exemple 2.

## EXEMPLES 8 à 10 ET EXEMPLE COMPARATIF C4

On répète l'exemple 1, mais en utilisant un substrat MR7 et en utilisant les sols d'oxyde minéral suivants :

| Exemple n° | Sol d'oxyde minéral | | Epaisseur de la couche d'oxyde minéral (nm) | Indice de réfraction n | Porosité (%) P | Porosité (%) p' |
|---|---|---|---|---|---|---|
| | Oxyde minéral | Liant (%)* | | | | |
| 8 | $SiO_2$ MA-ST / $TiO_2$ 1130F2 60/40 à 1,6 % dans EtOH | 20 | 72 | 1,410 | 35 | 57 |
| 9 | $SiO_2$ MA-ST / $TiO_2$ 1130F2 50/50 à 1,6 % dans EtOH | 20 | 73 | 1,440 | 34 | 57 |
| 10 | $SiO_2$ MA-ST / TiO = 1130F2 40/60 à 1,6 % dans EtOH | 20 | 61 | 1,470 | 32 | 57 |
| * Latex PU W234 en pourcentage en poids par rapport au poids d'oxyde minéral sec. | | | | | | |

A titre d'exemple comparatif C4, on prépare également un substrat MR7 directement revêtu de la couche de primaire et du revêtement anti-abrasion.

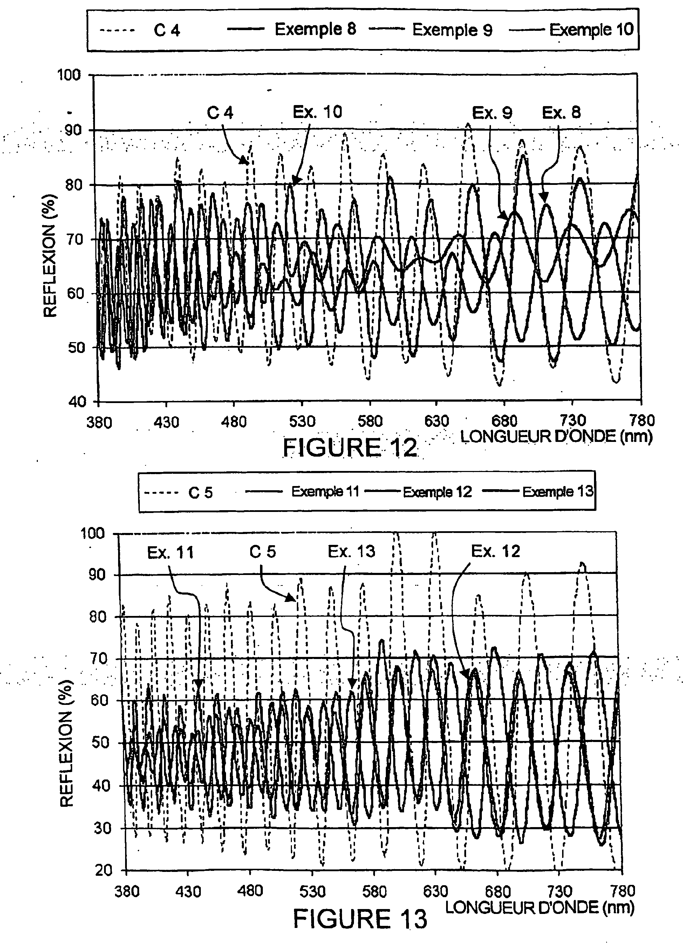

Les résultats de mesure de la réflexion en fonction de la longueur d'onde sont représentés par les graphes de la figure 12.

**EXEMPLES 11 à 13 et EXEMPLE COMPARATIF C5**

On répète l'exemple 1 mais en utilisant un substrat en verre minéral et en utilisant les sols d'oxyde minéral suivants :

| Exemple n° | Sol d'oxyde minéral | | Epaisseur de la couche d'oxyde minéral (nm) | Indice de réfraction n | Porosité (%) P | Porosité (%) p' |
|---|---|---|---|---|---|---|
| | Oxyde minéral | Liant (%)* | | | | |
| 11 | $SiO_2$ MA-ST / $TiO_2$ 1130F2 50/50 à 1,6 % dans EtOH | 20 | 73 | 1,440 | 34 | 57 |
| 12 | $SiO_2$ MA-ST / $TiO_2$ 1130F2 40/60 à 1,6 % dans EtOH | 20 | 61 | 1,470 | 32 | 57 |
| 13 | $SiO_2$ MA-ST / $TiO_2$ 1130F2 30170 à 1,6 % dans EtOH | 20 | 60 | 1,506 | 31 | 57 |
| * Latex PU W234 en pourcentage par rapport au poids d'oxyde métallique sec. | | | | | | |

A titre d'exemple comparatif C5, on réalise également un substrat minéral directement revêtu de la couche de primaire et du revêtement anti-abrasion.

Les résultats des mesures de réflexion en fonction de la longueur d'onde sont représentés par les graphes de la figure 13.

**EXEMPLES 14 à 19 et EXEMPLES COMPARATIFS C6 et C7**

On procède comme dans l'exemple 1 mais en utilisant les substrats, sols d'oxyde minéral et primaires mentionnés dans le tableau ci-dessous :

| Exemple n° | Substrat | Couche d'oxyde minéral | | | | Primaire |
|---|---|---|---|---|---|---|
| | | Sol d'oxyde minéral 176 | Epaisseur (nm) | Indice | p (%) | |
| 14 | MR7 | $SiO_2$ Stöber 176 / $ZrO_2$ ZSL 20N 30/70 à 2 % dans EtOH | 83 | 1,284 | 67 | Latex PUW234 |
| 15 | PC | $SiO_2$ Stöber 176 / $ZrO_2$ ZSL 20N 50/50 à 2 % dans EtOH | 115 | 1,289 | 60 | Latex ABu / MMA |
| 16 | MR6 | $SiO_2$ Stöber 176 / $ZrO_2$ ZSL 20N 50/50 à 2 % dans EtOH | 115 | 1,289 | 60 | Latex ABu / MMA |
| 17 | MR7 | $SiO_2$ Stöber 229 / $ZrO_2$ ZSL 20N 30/70 à 2,5 %dans EtOH | 90 | 1,309 | 64 | Latex PUW 234 |
| 18 | MR7 | $SiO_2$ Stöber 229 / $ZrO_2$ ZSL 20N 30/70 à 2,5 % dans EtOH | 103 | 1,328 | 61 | Sans primaire |
| 19 | MR7 | $SiO_2$ Stöber 229 / $ZrO_2$ ZSL 20N 30/70 à 2,5 % dans EtOH | 103 | 1,328 | 61 | Latex ABu / MMA |

(suite)

| Exemple n° | Substrat | Couche d'oxyde minéral | | | | Primaire |
|---|---|---|---|---|---|---|
| | | Sol d'oxyde minéral 176 | Epaisseur (nm) | Indice | p (%) | |
| C6 | PC | - | | | | Latex ABu / MMA |
| C7 | MR6 | - | | | | Latex ABu / MMA |

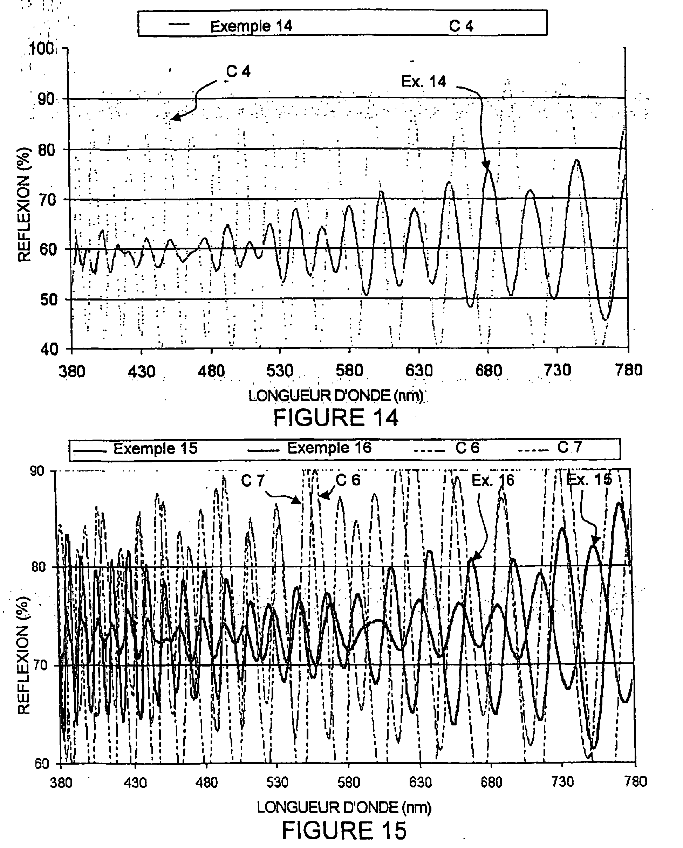

Les résultats de réflexion en fonction de la longueur d'onde sont représentés aux figures 14 à 15.

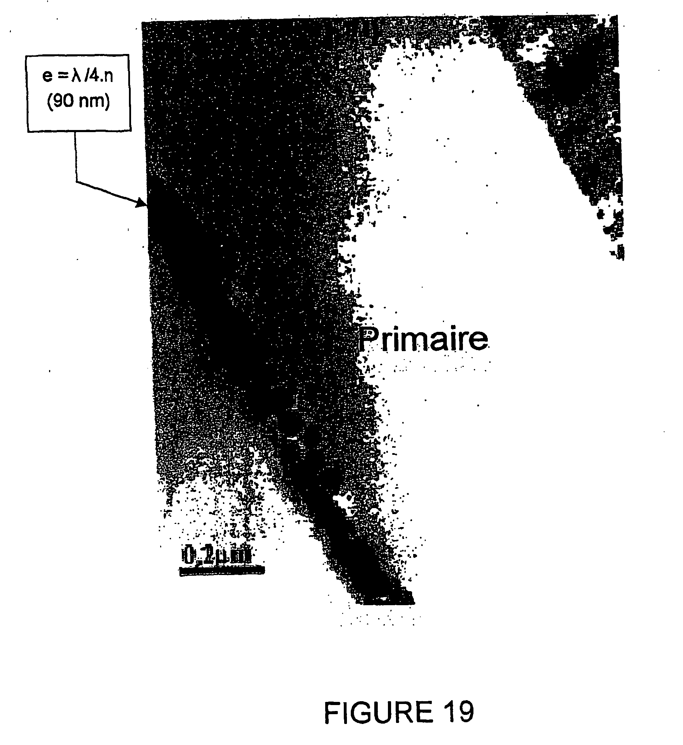

La figure 19 est une microphographie de l'article revêtu de l'exemple 17.

**EXEMPLES 20 à 22 et EXEMPLE COMPARATIF C8**

Les exemples ci-dessous qui ne correspondent pas à l'invention illustrent l'utilisation de bicouches d'oxyde minéral.

Chacune des couches des bicouches d'oxyde minéral est formée par dépôt au trempé comme dans l'exemple 1. Le primaire et le revêtement anti-abrasion sont les mêmes qu'à l'exemple 1 et réalisés de la même manière. Les substrats et les sols d'oxyde minéral utilisés sont donnés dans le tableau ci-dessous.

| Exemple n° | Substrat | Première couche | | | | Deuxième couche | | | |
|---|---|---|---|---|---|---|---|---|---|
| | | Sol d'oxyde minéral | Epaisseur (nm) | Indice | Porosité (%) | Sol d'oxyde minéral | Epaisseur (nm) | Indice | Porosité (%) |
| 20 | MR7 | SiO$_2$ Stöber 176 / ZrO$_2$ ZSL 20N 20/80 à 2 % dans l'éthanol | 88 | 1,346 | 63 | SiO$_2$ Stöber 176 / ZrO$_2$ ZSL 20N 50/50 à 2 % dans l'éthanol | 115 | 1,289 | 59 |
| 21 | Polyépisulfure n = 1,74 | SiO$_2$ Stöber 176 / ZrO$_2$ ZSL 20N 13/87 à 2 % dans l'éthanol | 76 | 1,336 | 68 | SiO$_2$ Stöber 176 / ZrO$_2$ ZSL 20N 50/50 à 2 % dans l'éthanol | 100 | 1,254 | 65 |

On réalise également un article comprenant une couche unique d'oxyde minéral selon l'invention en procédant comme à l'exemple 1, en utilisant le substrat et le sol d'oxyde minéral ci-dessous et les mêmes revêtements primaire et anti-abrasion qu'à l'exemple 1.

| Exemple n° | Sol d'oxyde Minéral | Epaisseur de la couche (nm) | Indice | Porosité (%) |
|---|---|---|---|---|
| 22 | SiO$_2$ Stöber 176 / ZrO$_2$ ZSL 20N 20/80 à ... | 88 | 1,346 | 63 |

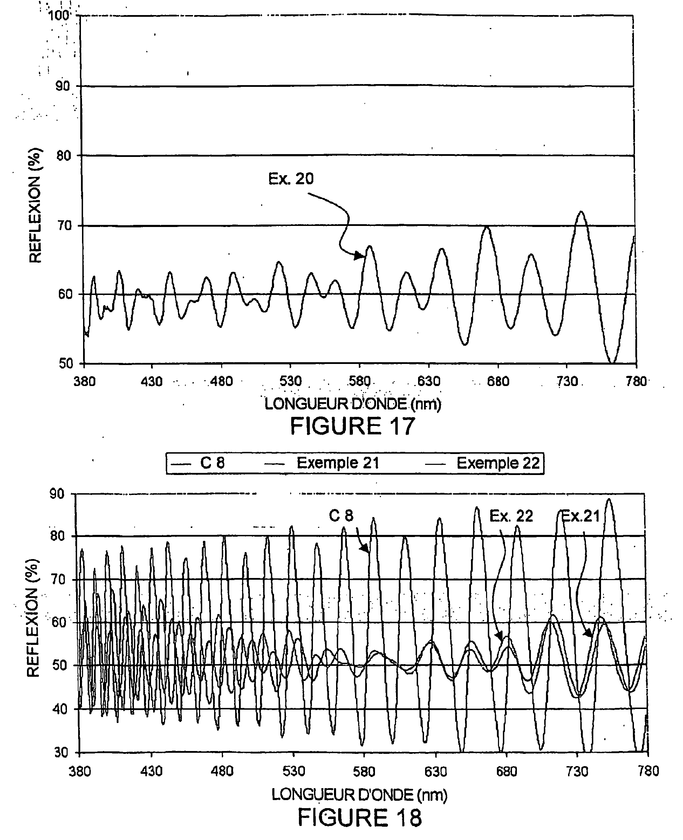

A titre de comparaison, (exemple comparatif C8), on a revêtu directement un substrat analogue (n = 1,74) directement avec le primaire et le revêtement anti-abrasion.
Les résultats de réflexion en fonction de la longueur d'onde sont donnés par les graphes des figures 17 et 18.

**Revendications**

1. Article d'optique comprenant un substrat en verre organique ou minéral et une couche d'un matériau polymérique transparent, et comprenant une couche intermédiaire en contact direct avec une face principale du substrat et la couche de matériau polymérique, la couche intermédiaire étant constituée de particules d'au moins un oxyde minéral colloïdal, cette couche intermédiaire ayant une porosité initiale, **caractérisé en ce que** la porosité initiale de la couche intermédiaire est comblée par soit du matériau de la couche de matériau polymérique soit du matériau du substrat si celui-ci est en verre organique, de sorte que la couche intermédiaire, après comblement de la porosité initiale, constitue une lame quart d'onde à une longueur d'onde λ, dans le domaine allant de 400 à 700 nm, définie par n = (n$_s$ x n$_v$)$^{1/2}$ et n x e = λ/4
où n est l'indice de réfraction de la lame quart d'onde,
n$_s$ est l'indice de réfraction du substrat,
n$_v$ est l'indice de réfraction de ladite couche de matériau polymérique,
e est l'épaisseur de la lame quart d'onde,
et **en ce que** la couche de matériau polymérique est une couche d'un primaire résistant au choc ayant une épaisseur de 0,5 à 20 μm ou une couche de revêtement anti-abrasion ayant une épaisseur de 1 à 15 μm.

2. Article d'optique selon la revendication 1, **caractérisé en ce que** la couche intermédiaire est constituée de particules d'au moins un oxyde minéral colloïdal et d'un liant, cette couche intermédiaire ayant une porosité initiale, et la porosité initiale de la couche intermédiaire est comblée par soit du matériau de la couche de matériau polymérique soit du matériau du substrat si celui-ci est en verre organique.

3. Article d'optique selon la revendication 2, **caractérisé en ce que** la porosité initiale de la couche intermédiaire est comblée en partie par le liant.

4. Article d'optique selon l'une quelconque des revendications précédentes, **caractérisé en que** la couche intermédiaire, après comblement de la porosité initiale, constitue chacune une lame quart d'onde à une longueur d'onde dans le domaine allant de 450 à 650 nm.

5. Article d'optique selon la revendication 1, **caractérisé en ce que** la porosité en l'absence de liant de la couche intermédiaire est d'au moins 40 % en volume, de préférence d'au moins 50 % en volume.

6. Article d'optique selon la revendication 5, **caractérisé en ce que**, en présence de liant et avant comblement, la couche intermédiaire a une porosité d'au moins 25 %, de préférence d'au moins 30 % en volume.

7. Article d'optique selon l'une quelconque des revendications 1 à 6, **caractérisé en que** la taille des particules du ou des oxydes minéraux colloïdaux est de 10 à 80 μm, de préférence 30 à 80 et mieux de 30 à 60 nm.

8. Article d'optique selon l'une quelconque des revendications 1 à 7, **caractérisé en ce que** le liant représente jusqu'à 30 %, de préférence jusqu'à 25 %, mieux 10 à 20 % en poids, par rapport au poids total d'oxyde minéral sec de la couche intermédiaire.

9. Article d'optique selon l'une quelconque des revendications précédentes, **caractérisé en ce que** le liant est un latex de polyuréthane.

**10.** Article d'optique selon l'une quelconque des revendications précédentes, **caractérisé en ce que** l'oxyde minéral colloïdal est choisi parmi SiO$_2$, TiO$_2$ ZrO$_2$, SnO$_2$, Sb$_2$O$_3$, Y$_2$O$_3$, Ta$_2$O$_5$ et leurs mélanges.

**11.** Article selon la revendication 10, **caractérisée en ce que** la couche intermédiaire comprend un mélange d'au moins un oxyde minéral colloïdal de bas indice $( n_D^{25} < 1,54 )$ et d'au moins un oxyde minéral colloïdal de haut indice $( n_D^{25} \geq 1,54 )$.

**12.** Article d'optique selon la revendication 11, **caractérisé en ce que** le rapport pondéral oxyde minéral colloïdal bas indice/oxyde minéral haut indice varie de 30/70 à 70/30.

**13.** Article d'optique selon la revendication 11 ou 12, **caractérisé en ce que** le mélange d'oxydes minéraux colloïdaux est un mélange de SiO$_2$ et de TiO$_2$ ou un mélange de SiO$_2$ et de ZrO$_2$.

**14.** Article selon l'une quelconque des revendications précédentes, **caractérisé en ce que** le taux de fluor en poids dans ledit matériau polymérique est inférieur à 5% en poids, de préférence inférieur à 1 % en poids et mieux de 0% en poids.

**15.** Article selon l'une quelconque des revendications précédentes, **caractérisé en ce que** la porosité de la lame quart d'onde après comblement est inférieure à 5%, préférentiellement inférieure à 3% et mieux de 0%, en volume.

**16.** Article d'optique selon l'une quelconque des revendications précédentes, **caractérisé en ce que** le substrat a un indice de réfraction $n_D^{25}$ de 1,55 à 1,80, de préférence de 1,60 à 1,75.

**17.** Article selon l'une quelconque des revendications précédentes, **caractérisé en ce que** la couche de matériau polymérique est une couche d'un primaire résistant au choc.

**18.** Article selon la revendication 17, **caractérisée en ce que** le matériau du primaire est un latex poly(méth)acrylique ou de polyuréthane.

**19.** Article selon l'une quelconque des revendications précédentes, **caractérisé en ce que** :

   - la couche de matériau polymérique est une couche d'un primaire résistant au choc,
   - l'article comprend un revêtement anti-abrasion déposé sur la couche de primaire résistant au choc et un revêtement antireflet formé sur le revêtement anti-abrasion.

**20.** Article selon l'une quelconque des revendications 1 à 16, **caractérisé en ce que** la couche de matériau polymérique est une couche de revêtement anti-abrasion.

**21.** Article selon l'une quelconque des revendications 17 à 19, **caractérisé en ce qu'**il comprend un revêtement anti-abrasion déposé sur la couche de primaire résistant au choc.

**22.** Article selon l'une quelconque des revendications 20 à 21, **caractérisé en que** qu'il comprend la formation d'un revêtement anti-reflet sur le revêtement anti-abrasion.

**23.** Article d'optique selon l'une quelconque des revendications 1 à 22, **caractérisé en ce que** l'article est une lentille ophtalmique, en particulier un verre de lunettes.

**24.** Procédé de fabrication d'un article d'optique comprenant :

   a) la formation sur au moins une surface principale d'un support, par application d'un sol d'au moins un oxyde minéral colloïdal, d'une couche intermédiaire d'au moins un oxyde minéral colloïdal ayant une porosité initiale ;
   b) la formation sur la couche intermédiaire soit d'une couche d'un matériau polymérique optiquement transparent, soit d'un substrat en verre organique ;
   et **caractérisé en ce que** :
   c) la porosité de la couche intermédiaire est comblée par le matériau soit de la couche soit du substrat formé à l'étape (b), de sorte que la couche intermédiaire, après comblement de la porosité initiale, constitue une lame quart d'onde à une longueur d'onde λ dans le domaine allant de 400 à 700 nm,
définie par n = $(n_s \times n_v)^{1/2}$ et n x e = λ/4
où n est l'indice de réfraction de la lame quart d'onde,
$n_s$ est l'indice de réfraction du substrat,
$n_v$ est l'indice de réfraction de ladite couche de matériau polymérique,
e est l'épaisseur de la lame quart d'onde,
d) et **en ce que** la couche de matériau polymérique est une couche d'un primaire résistant au choc ayant une épaisseur de 0,5 à 20 $\mu$m ou une couche de revêtement anti-abrasion ayant une épaisseur de 1 à 15 $\mu$m.

25. Procédé selon la revendication 24, **caractérisé en ce qu'**il comprend la formation sur au moins une surface principale d'un support, par application d'un sol d'au moins un oxyde minéral colloïdal contenant un liant, d'une couche intermédiaire d'au moins un oxyde minéral colloïdal et de liant, ladite couche ayant une porosité initiale.

26. Procédé selon la revendication 25, **caractérisé en ce que** la porosité de la couche intermédiaire est comblée en partie par le liant.

27. Procédé selon l'une quelconque des revendications 24 à 26, **caractérisé en que** la couche intermédiaire, après comblement de la porosité initiale, constitue une lame quart d'onde dans le domaine allant de 450 à 650 nm.

28. Procédé selon l'une quelconque des revendications 24 à 27, **caractérisé en ce que** le support est une surface principale de moulage d'une partie de moule comportant au moins un revêtement constituant la couche de matériau polymérique optiquement transparent, et la porosité initiale de la couche intermédiaire est comblée par du matériau du substrat en verre organique.

29. Procédé selon la revendication 28, **caractérisé en ce que** le substrat est formé par coulée d'une composition polymérisable liquide dans le moule et polymérisation de la composition.

30. Procédé selon l'une quelconque des revendications 24 à 29, **caractérisé en ce que** la porosité initiale de la couche intermédiaire, en l'absence de liant, est d'au moins 40 % en volume.

31. Procédé selon l'une quelconque des revendications 24 à 29, **caractérisé en ce que** la porosité en l'absence de liant de la couche intermédiaire est d'au moins 50 % en volume.

32. Procédé selon l'une quelconque des revendications 24 à 31 **caractérisé en que** la taille des particules du ou des oxydes minéraux colloïdaux est de 10 à 80 nm, de préférence 30 à 80 et mieux de 30 à 60 nm.

33. Procédé selon l'une quelconque des revendications 24 à 32, **caractérisé en ce que** le liant représente jusqu'à 30 %, de préférence jusqu'à 25 %, mieux 10 à 20 % en poids, par rapport au poids total d'oxyde minéral sec de la couche intermédiaire.

34. Procédé selon l'une quelconque des revendications 24 à 33, **caractérisé en ce que** le liant est un latex de polyuréthane.

35. Procédé selon l'une quelconque des revendications 24 à 34, **caractérisé en ce que** l'oxyde minéral colloïdal est choisi parmi $SiO_2$, $TiO_2$, $ZrO_2$, $SnO_2$, $Sb_2O_3$, $Y_2O_3$, $Ta_2O_5$ et leurs mélanges.

36. Procédé selon l'une quelconque des revendications 24 à 35, **caractérisée en ce que** la ou la couche intermédiaire comprend un mélange d'au moins un oxyde minéral colloïdal de bas indice $(n_D^{25} < 1,54)$ et d'au moins un oxyde minéral colloïdal de haut indice $(n_D^{25} \geq 1,54)$.

37. Procédé selon la revendication 36, **caractérisé en ce que** le rapport pondéral oxyde minéral colloïdal bas indice/ oxyde minéral haut indice varie de 30/70 à 70/30.

38. Procédé selon la revendication 36 ou 37, **caractérisé en ce que** le mélange d'oxydes minéraux colloïdaux est un mélange de $SpiO_2$ et de $TiO_2$ ou un mélange de $SiO_2$ et de $ZrO_2$.

**39.** Procédé selon l'une quelconque des revendications 24 à 38, **caractérisé en ce que** le substrat a un indice de réfraction $n_D^{25}$ de 1,55 à 1,80, de préférence de 1,60 à 1,75.

**40.** Procédé selon l'une quelconque des revendications 24 à 39, **caractérisé en ce que** la couche de matériau polymérique est une couche d'un primaire résistant au choc.

**41.** Procédé selon la revendication 40, **caractérisée en ce que** le matériau du primaire est un latex poly(méth)acrylique ou de polyuréthane.

**42.** Procédé selon l'une quelconque des revendications 24 à 39, **caractérisé en ce que** la couche de matériau polymérique est une couche de revêtement anti-abrasion.

**43.** Procédé selon l'une quelconque des revendications 40 ou 41, **caractérisé en ce qu'**il comprend la formation sur la couche de primaire anti-choc par trempage ou dépôt par centrifugation et durcissement, d'un revêtement anti-abrasion.

**44.** Procédé selon l'une quelconque des revendications 42 ou 43, **caractérisé en que** qu'il comprend la formation d'un revêtement anti-reflet sur le revêtement anti-abrasion,

**Claims**

**1.** An optical item comprising an organic or mineral glass substrate and a transparent polymeric material layer and comprising an intermediate layer in direct contact with a main side of the substrate and the polymeric material layer, the intermediate layer being made of particles of at least one colloidal mineral oxide, such an intermediate layer having an initial porosity, **characterized in that** the initial porosity of the intermediate layer is filled either by material from the polymeric material layer or by the substrate material if the latter is made in organic glass, so that the intermediate layer, after initial porosity filling, represents a quarter waveplate at a wavelength $\lambda$ in the range from 400 to 700 nm, defined by:

$$n = (n_s \times n_v)^{1/2}$$

$$n.e = \lambda/4$$

wherein n is the refractive index of the quarter waveplate ;
$n_s$ is the refractive index of the substrate,
$n_v$ is the refractive index of said polymeric material layer, and e is the thickness of the quarter waveplate, and wherein the polymeric material layer is a layer of an impact resistant primer having a thickness of 0.5 to 20 $\mu$m or an anti-abrasion coating layer having a thickness of 1 to 15 $\mu$m.

**2.** An optical item according to claim 1, wherein the intermediate layer is made of particles of at least one colloidal oxide and a binder, said intermediate layer having an initial porosity, and the initial porosity of the intermediate layer is filled either by material from the polymeric material layer or by the substrate material if the latter is made in organic glass.

**3.** An optical item according to claim 2, wherein the initial porosity of the intermediate layer is partly filled by the binder.

**4.** An optical item according to any one of the preceding claims, wherein the intermediate layer, after initial porosity filling, represents a quarter waveplate at a wavelength in the range from 450 to 650 nm.

**5.** An optical item according to claim 2, **characterized in that** the porosity in the absence of a binder of the intermediate layers is at least 40 % by volume, preferably at least 50 % by volume.

**6.** An optical item according to claim 5, **characterized in that**, in the presence of a binder and before filling, the intermediate layer has a porosity of at least 25 %, preferably at least 30 % by volume.

**7.** An optical item according to any one of claims 1 to 6, **characterized in that** the particle size of the colloidal mineral oxide(s) ranges from 10 to 80 nm, preferably from 30 to 80 and more preferably from 30 to 60 nm.

**8.** An optical item according to any one of claims 1 to 7, **characterized in that** the binder accounts up to 30 %, preferably up to 25 %, more preferably from 10 to 20 % by weight based on the total weight of dry mineral oxide of the intermediate layer.

**9.** An optical item according to any one of preceding claims, **characterized in that** the binder is a polyurethane latex.

**10.** An optical item according to any one of preceding claims, caracterized in that the colloidal mineral oxide is selected amongst $SiO_2$, $TiO_2$, $ZrO_2$, $SnO_2$, $Sb_2O_3$, $Y_2O_3$, $Ta_2O_5$ and the mixtures thereof.

**11.** An optical item according to claim 10, **characterized in that** the intermediate layer comprises a mixture of at least one low index colloidal mineral oxide $(n_D^{25} < 1.54)$ and at least one high index colloidal mineral oxide $(n_D^{25} \geq 1.54)$.

**12.** An optical item according to claim 11, **characterized in that** the low index colloidal mineral oxide /high index mineral oxide weight ratio ranges from 30/70 to 70/30.

**13.** An optical item according to claim 11 or 12, **characterized in that** the colloidal mineral oxide mixture is a $SiO_2$ and $TiO_2$ mixture or a $SiO_2$ and $ZrO_2$ mixture.

**14.** An optical item according to any one of the preceding claims, wherein the fluorine weight content in said polymeric material is lower than 5 % by weight, preferably lower than 1% by weight and better 0 % by weight.

**15.** An optical item according to any one of the preceding claims, wherein the porosity of the quarter waveplate after porosity filling is < 5%, preferably < 3% and better 0 %, in volume.

**16.** An optical item according to any one of preceding claims, **characterized in that** the substrate has a $n_D^{25}$ refractive index ranging from 1.55 to 1.80, preferably from 1.60 to 1.75.

**17.** An item according to any one of preceding claims, **characterized in that** the polymeric material layer is an impact resistant primer layer.

**18.** An item according to claim 17, **characterized in that** the primer material is a poly(meth)acrylic or a polyurethane latex.

**19.** An item according to any one of the preceding claims, wherein:

   - the polymeric material layer is a layer of an impact resistant primer,
   - the item comprises an anti-abrasion coating deposited on the impact resistant primer layer and an antireflection coating formed on the anti-abrasion coating.

**20.** An item according to any one of claims 1 to 16, **characterized in that** the polymeric material layer is an anti-abrasion coating layer.

**21.** An item according to any one of claims 17 to 19, **characterized in that** it comprises an anti-abrasion coating applied on the impact-resistant primer layer.

**22.** An item according to any one of claims 20 to 21, **characterized in that** it comprises an anti-reflection coating formed on the anti-abrasion coating.

**23.** An optical item according to any one of claims 1 to 22, **characterized in that** the item is an ophthalmic lens, more particularly, a spectacle lens.

**24.** A method for manufacturing an optical item, comprising the steps of:

a) forming on at least one main surface of a support, through coating of a sol of at least one colloidal mineral oxide, an intermediate layer of at least one colloidal mineral oxide with an initial porosity ; and

b) forming on the intermediate layer either an optically transparent polymeric material layer or an organic glass substrate ;

and **characterized in that**:

c) the initial porosity of the intermediate layer is filled by polymeric material of the layer or by substrate material formed at step b), so that the intermediate layer, after initial porosity filling, represents a quarter waveplate at a wavelength λ in the range from 400 to 700 nm defined by:

$$n = (n_s \times n_v)^{1/2}$$

$$n.e = \lambda/4$$

wherein n is the refractive index of the quarter waveplate ;

$n_s$ is the refractive index of the substrate,

$n_v$ is the refractive index of said polymeric material layer, and e is the thickness of the quarter waveplate ;

d) the polymeric material layer is a layer of an impact resistant primer having a thickness of 0.5 to 20 μm or an anti-abrasion coating layer having a thickness of 1 to 15 μm.

**25.** A method according to claim 24, comprising the formation on at least one main surface of a support, through coating of a sol of at least one colloidal mineral oxide containing a binder, of an intermediate layer of at least one colloidal mineral oxide and a binder, said layer having an initial porosity.

**26.** A method according to claim 25, wherein the porosity of the intermediate layer is partly filled by the binder.

**27.** A method according to any one of claims 24 to 26, wherein the intermediate layer, after initial porosity filling, represents a quarter waveplate in the range from 450 to 650 nm.

**28.** A method according to any one of claims 24 to 27, **characterized in that** the support is a main moulding surface of a mould part comprising at least a coating representing the layer of optically transparent polymeric material, and the initial porosity of the intermediate layer is filled by material from the organic glass substrate.

**29.** A method according to claim 28, **characterized in that** the substrate is formed through casting a liquid polymerisable composition in the mould and polymerisation of the composition.

**30.** A method according to any one of claims 24 to 29, **characterized in that** the initial porosity of the intermediate layer, in the absence of a binder, is at least 40 % by volume.

**31.** A method according to any one of claims 24 to 29, **characterized in that** the porosity in the absence of a binder of the intermediate layer is at least 50 % by volume.

**32.** A method according to any one of claims 24 to 31, **characterized in that** the particle size of the colloidal mineral oxide(s) ranges from 10 to 80 nm, preferably from 30 to 80 and more preferably from 30 to 60 nm.

**33.** A method according to any one of claims 24 to 32, **characterized in that** the binder accounts up to 30 %, preferably up to 25 %, more preferably from 10 to 20 % by weight, based on the total weight of dry mineral oxide of the intermediate layer.

**34.** A method according to any one of claims 24 to 33, **characterized in that** the binder is a polyurethane latex.

**35.** A method according to any one of claims 24 to 34, **characterized in that** colloidal mineral oxide is selected amongst $SiO_2$, $TiO_2$, $ZrO_2$, $SnO_2$, $Sb_2O_3$, $Y_2O_3$, $Ta_2O_5$ and the mixtures thereof.

36. A method according to any one of claims 24 to 35, **characterized in that** the intermediate layer comprises a mixture of at least one low index colloidal mineral oxide $(n_D^{25} < 1.54)$ and at least one high index colloidal mineral oxide $(n_D^{25} \geq 1.54)$.

37. A method according to claim 36, **characterized in that** the low index colloidal mineral oxide /high index mineral oxide weight ratio ranges from 30/70 to 70/30.

38. A method according to claim 36 or 37, **characterized in that** the colloidal mineral oxide mixture is a $SiO_2$ and $TiO_2$ mixture or a $SiO_2$ and $ZrO_2$ mixture.

39. A method according to any one of claims 24 to 38, **characterized in that** the substrate has a $n_D^{25}$ refractive index ranging from 1.55 to 1.80, preferably from 1.60 to 1.75.

40. A method according to any one of claims 24 to 39, **characterized in that** the polymeric material layer is an impact resistant primer layer.

41. A method according to claim 40, **characterized in that** the primer material is a poly(meth)acrylic or a polyurethane latex.

42. A method according to any one of claims 24 to 39, **characterized in that** the polymeric material layer is an anti-abrasion coating layer.

43. A method according to any one of claims 40 to 41, **characterized in that** it comprises the step of forming on the impact resistant primer layer, through dip coating or spin coating and hardening, an anti-abrasion coating.

44. A method according to any one of claims 42 or 43, **characterized in that** it comprises the step of forming an anti-reflection coating on the anti-abrasion coating.

**Patentansprüche**

1. Optischer Artikel umfassend ein organisches oder mineralisches Glassubstrat und eine Lage eines transparenten polymerischen Materials, und umfassend eine intermediäre Lage, die in direkten Kontakt mit einer Hauptfläche des Substrats und der Lage von polymerischem Material ist, wobei die intermediäre Lage aus Partikeln von zumindest einem Kolloidalmineraloxid gebildet ist, wobei die intermediäre Lage eine Initialporosität aufweist, **dadurch gekennzeichnet, dass** die Initialporosität der intermediären Lage durch entweder Material der Lage von polymerischem Material oder durch Material des Substrats ausgefüllt ist, wenn das Material des Substrats aus organischem Glas ist, so dass die intermediäre Lage nach Ausfüllen der Initialporosität eine Viertelwellenlängenplatte bildet, bei einer Wellenlänge $\lambda$ in einem Bereich von 400 bis 700 nm, definiert durch n = $(n_s \times n_v)^{1/2}$ und n x e = $\lambda/4$, wobei n der Brechungsindex der Viertelwellenlängenplatte, $n_s$ der Brechungsindex des Substrats, $n_v$ der Brechungsindex der Lage von polymerischem Material und e die Dicke der Viertelwellenlängenplatte ist, und wobei die Lage von polymerischem Material eine erste schockresistente Lage mit einer Dicke von 0,5 bis 20 $\mu$m oder eine Lage von Anti-Abrasionsbesschichtung mit einer Dicke von 1 bis 15 $\mu$m ist.

2. Optischer Artikel gemäß Anspruch 1, **dadurch gekennzeichnet dass** die intermediäre Lage aus Partikeln gebildet wird von zumindest einem Kolloidalmineraloxid und einem Bindemittel, wobei die intermediäre Lage eine Initialporosität hat, und die Initialporosität der intermediären Lage durch entweder Material der Lage von polymerischem Material oder durch Material von Substrat aufgefüllt wird, wenn dieses aus organischem Glas ist.

3. Optischer Artikel gemäß Anspruch 2 **dadurch gekennzeichnet, dass** die Initialporosität der intermediären Lage teilweise durch den Bindemittel aufgefüllt ist.

4. Optischer Artikel gemäß einem der vorangegangenen Ansprüche **dadurch gekennzeichnet, dass** die intermediäre Lage nach dem Auffüllen der Initialporosität eine Viertelwellenlängenplatte bildet von einer Wellenlänge im Bereich von 450 bis 650 nm.

**5.** Optischer Artikel gemäß Anspruch 1 **dadurch gekennzeichnet, dass** die Porosität bei Fehlen des Bindemittels der intermediären Lage zumindest 40% Vol., bevorzugt mindestens 50% Vol ist.

**6.** Optischer Artikel gemäß Anspruch 5 **dadurch gekennzeichnet, dass** beim Vorliegen von Bindemittel und vor dem Auffüllen die intermediäre Lage eine Porosität hat von zumindest 25% Vol., bevorzugt von mindestens 30% Vol.

**7.** Optischer Artikel gemäß einem der Ansprüche 1 bis 6 **dadurch gekennzeichnet, dass** die Größe der Partikel des oder der Kolloidalmineraloxide(s) von 10 bis 80 nm, bevorzugt 30 bis 80 nm, und besonders bevorzugt 30 bis 60 nm ist.

**8.** Optischer Artikel gemäß einem der Ansprüche 1 bis 7 **dadurch gekennzeichnet, dass** das Bindemittel bis zu 30 Gew.-%, bevorzugt bis zu 25 Gew.-%, besonders bevorzugt 10 bis 20 Gew.-% im Bezug auf das Gesamtgewicht des trockenen Mineraloxids der intermediären Lage ausmacht.

**9.** Optischer Artikel gemäß einem der vorangegangenen Ansprüche **dadurch gekennzeichnet, dass** das Bindemittel ein Polyurethanlatex ist.

**10.** Optischer Artikel gemäß einem der vorangegangenen Ansprüche **dadurch gekennzeichnet, dass** das Kollodiaimineraloxid ausgewählt wird unter $SiO_2$, $TiO_2$, $ZrO_2$, $SnO_2$, $Sb_2O_3$, $Y_2O_3$, $Ta_2O_5$ und deren Mischungen.

**11.** Optischer Artikel gemäß Anspruch 10 **dadurch gekennzeichnet, dass** die intermediäre Lage eine Mischung von zumindest einem Kolloidalmineraloxid von niedrigen Index ($n^{25}_D < 1,54$) und zumindest einem Kolloidalmineraloxid von hohem Index ($n^{25}_D \geq 1,54$) umfasst.

**12.** Optischer Artikel gemäß Anspruch 11 **dadurch gekennzeichnet, dass** das Gewichtsverhältnis von Kolloidalmineraloxid von niedrigem Index zu Mineraloxid von hohem Index variiert von 30/70 bis 70/30.

**13.** Optischer Artikel gemäß Anspruch 11 oder 12 **dadurch gekennzeichnet, dass** die Mischung der Kolloidalmineraloxide eine Mischung von $SiO_2$ und $TiO_2$ oder eine Mischung von $SiO_2$ und $ZrO_2$ ist.

**14.** Optischer Artikel gemäß einem der vorangegangenen Ansprüche **dadurch gekennzeichnet, dass** das Gehalt von Fluor im Gewicht des polymerischen Materials weniger ist als 5 Gew.-%, bevorzugt kleiner als 1 Gew.-%, und besonders bevorzugt 0 Gew.-%.

**15.** Optischer Artikel gemäß einem der vorangegangenen Ansprüche **dadurch gekennzeichnet, dass** die Porosität der Viertelwellenlängenplatte nach dem Auffüllen kleiner ist als 5% Vol., bevorzugt kleiner als 3% Vol., und besonders bevorzugt von 0% Vol. ist.

**16.** Optischer Artikel gemäß einem der vorangegangenen Ansprüche **dadurch gekennzeichnet, dass** das Substrat einen Brechungsindex $n^{25}_D$ von 1,55 bis 1,80 hat, bevorzugt von 1,60 bis 1,75.

**17.** Optischer Artikel gemäß einem der vorangegangenen Ansprüche **dadurch gekennzeichnet, dass** die Lage von polymerischem Material eine schockresistente Primer-Lage ist.

**18.** Optischer Artikel gemäß Anspruch 17 **dadurch gekennzeichnet, dass** das Primer-Material ein Poly(Meth)Acryllatex oder Polyurethanlatex ist.

**19.** Optischer Artikel gemäß einem der vorangegangenen Ansprüche **dadurch gekennzeichnet, dass**:

   - die Lage von polymerischem Material eine schockresistente Primer-Lage ist,
   - der Artikel eine Anti-Abrasionsbeschichtung umfasst, welche auf die schockresistente Primer-Lage aufgebracht ist und eine Anti-Reflexbeschichtung die auf der Anti-Abrasionsbeschichtung ausgeformt ist.

**20.** Optischer Artikel gemäß einem der Ansprüche 1 bis 16 **dadurch gekennzeichnet, dass** die Lage von polymerischem Material eine Lage von Anti-Abrasionsbeschichtung ist.

**21.** Optischer Artikel gemäß einem der Ansprüche 17 bis 19 **dadurch gekennzeichnet, dass** er eine Anti-Abrasionsbeschichtung umfasst, die auf der schockresistente Primer-Lage aufgebracht ist.

22. Optischer Artikel gemäß einem der Ansprüche 20 bis 21, **dadurch gekennzeichnet dass** er die Bildung einer Anti-Reflexbeschichtung an der Anti-Abrasionsbeschichtung umfasst.

23. Optischer Artikel gemäß einem der Ansprüche 1 bis 22 **dadurch gekennzeichnet, dass** der Artikel eine ophthalmische Linse ist, insbesondere ein Brillenglas.

24. Herstellungsverfahren eines optischen Artikels umfassend:

   a) Bildung an zumindest einer Hauptfläche eines Trägers, durch Aufbringen eines Soles von zumindest einem Kolloidalmineraloxid, einer intermediären Lage von zumindest einem Kolloidalmineraloxid welche eine Initialporosität hat;
   b) Bildung an der intermediären Lage von entweder einer Lage von optisch transparenten, polymerischem Material oder einem organischen Glassubstrat;
   **dadurch gekennzeichnet, dass**:
   c) Die Porosität der intermediären Lage durch das Material von entweder der Lage oder des Substrats, gebildet in Schritt (b), aufgefüllt wird, so dass die intermediäre Lage nach dem Auffüllen der Initialporosität eine Viertelwellenlängenplatte bildet, von einer Wellenlänge $\lambda$ in einem Bereich von 400 bis 700 nm, definiert durch n = $(n_s \times n_v)^{1/2}$ und n x e = $\lambda/4$, wobei n der Brechungsindex der Viertelwellenlängenplatte, $n_s$ der Brechungsindex des Substrats, $n_v$ der Brechungsindex der Schicht von polymerischem Material und e die Dicke der Viertelwellenlängenplatte ist,
   d) und wobei die Lage von polymerischem Material eine schockresistente Primer-Lage mit einer Dicke von 0,5 bis 20 $\mu$m oder eine Lage von Anti-Abrasionsbeschichtung ist, welche eine Dicke von 1 bis 15 $\mu$m hat.

25. Verfahren gemäß Anspruch 24, **dadurch gekennzeichnet dass** es umfasst die Bildung, an zumindest einer Hauptfläche eines Trägers, durch Aufbringen eines Soles von zumindest einem Bindemittel enthaltenden Kolloidalmineraloxid, eine intermediäre Lage aus zumindest einem Bindemittel enthaltenden Kolloidalmineraloxid, wobei die Lage eine Initialporosität hat.

26. Verfahren gemäß Anspruch 25 **dadurch gekennzeichnet, dass** die Porosität der intermediären Lage teilweise durch das Bindemittel aufgefüllt wird/ist.

27. Verfahren gemäß einem der Ansprüche 24 bis 26 **dadurch gekennzeichnet, dass** die intermediäre Lage nach dem Auffüllen der Initialporosität eine Viertelwellenlängenplatte bildet, im Bereich von 450 bis 650 nm.

28. Verfahren gemäß einem der Ansprüche 24 bis 27 **dadurch gekennzeichnet, dass** der Träger eine Gußhauptfläche in einem Teil einer Gießform ist, die zumindest eine Beschichtung umfasst, die die Lage des optisch transparenten, polymerischen Materials bildet, und die Initialporosität der intermediären Lage durch Material des organischen Glassubstrats aufgefüllt wird/ist.

29. Verfahren gemäß Anspruch 28 **dadurch gekennzeichnet, dass** das Substrat durch Einfüllen einer flüssigen, polymerisierbaren Zusammensetzung in die Gießform und Polymerisation der Zusammensetzung gebildet wird.

30. Verfahren gemäß einem der Ansprüche 24 bis 29 **dadurch gekennzeichnet, dass** die Initialporosität der intermediären Lage beim Fehlen von Bindemittel von zumindest 40% Vol. ist.

31. Verfahren gemäß einem der Ansprüche 24 bis 29 **dadurch gekennzeichnet, dass** die Porosität beim Fehlen von Bindemittel der intermediären Lage von zumindest 50% Vol. ist.

32. Verfahren gemäß einem der Ansprüche 24 bis 31 **dadurch gekennzeichnet, dass** die Größe der Partikel des oder der Kolloidalmineraloxide(s) zwischen 10 bis 80 nm, bevorzugt 30 bis 80 nm und besonders bevorzugt 30 bis 60 nm ist.

33. Verfahren gemäß einem der Ansprüche 24 bis 32 **dadurch gekennzeichnet, dass** das Bindemittel bis zu 30 Gew.-%, bevorzugt bis 25 Gew.-%, besonders bevorzugt 10 bis 20 Gew.-% in Bezug auf das Gesamtgewicht des trockenen Mineraloxids der intermediären Lage darstellt.

34. Verfahren gemäß einem der Ansprüche 24 bis 33 **dadurch gekennzeichnet, dass** das Bindemittel ein Polyurethanlatex ist.

**35.** Verfahren gemäß einem der Ansprüche 24 bis 34 **dadurch gekennzeichnet, dass** das Kolloidalmineraloxid ausgewählt ist unter $SiO_2$, $TiO_2$, $ZrO_2$, $SnO_2$, $Sb_2O_3$, $Y_2O_3$, $Ta_2O_5$ und deren Mischungen.

**36.** Verfahren gemäß einem der Ansprüche 24 bis 35 **dadurch gekennzeichnet, dass** die intermediäre Lage eine Mischung von zumindest einem Kolloidalmineraloxid von niedrigem Index ($n^{25}_D < 1{,}54$) und zumindest einem Kolloidalmineraloxid von hohem Index ($n^{25}_D \geq 1{,}54$) umfasst.

**37.** Verfahren gemäß Anspruch 36 **dadurch gekennzeichnet, dass** das Gewichtsverhältnis zwischen dem Kolloidalmineraloxid von niedrigem Index zu dem Mineraloxid von hohem Index von 30/70 bis 70/30 variiert.

**38.** Verfahren gemäß Anspruch 36 oder 37 **dadurch gekennzeichnet, dass** die Mischung der Kolloidalmineraloxide eine Mischung ist von $SiO_2$ und $TiO_2$ oder eine Mischung ist von $SiO_2$ und $ZrO_2$.

**39.** Verfahren gemäß einem der Ansprüche 24 bis 38 **dadurch gekennzeichnet, dass** das Substrat einen Brechungsindex $n^{25}_D$ von 1,55 bis 1,80, bevorzugt von 1,60 bis 1,75 hat.

**40.** Verfahren gemäß einem der Ansprüche 24 bis 39 **dadurch gekennzeichnet, dass** die Lage von polymerischem Material eine schockresistente Primer-Lage ist.

**41.** Verfahren gemäß Anspruch 4o **dadurch gekennzeichnet, dass** das Primer-Material ein Poly(Meth)Acryllatex oder Polyurethanlatex ist.

**42.** Verfahren gemäß einem der Ansprüche 24 bis 39 **dadurch gekennzeichnet, dass** die Lage von polymerischem Material eine Lage von einer Anti-Abrasionsbeschichtung ist.

**43.** Verfahren gemäß einem der Ansprüche 40 oder 41 **dadurch gekennzeichnet, dass** es die Bildung an der Antischock-Primer-Lage durch Eintauchen, oder Aufbringen durch Zentrifugation und Härtung, einer Anti-Abrasionsbeschichtung umfasst.

**44.** Verfahren gemäß einem der Ansprüche 42 oder 43 **dadurch gekennzeichnet, dass** es die Bildung einer Anti-Reflexbeschichtung an der Anti-Abrasionsbeschichtung umfasst.

**FIGURE 1**

**FIGURE 2**

**FIGURE 3**

**FIGURE 4**

SUBSTRAT NU

↓

PREPARATION
DU
SUBSTRAT

↓

DEPOT PAR TREMPAGE
OU CENTRIFUGATION DE LA
COUCHE D'OXYDE
MINERAL COLLOIDAL

↓

SECHAGE DE LA
COUCHE D'OXYDE
MINERAL COLLOIDAL

↓

DEPOT PAR TREMPAGE
OU CENTRIFUGATION
D'UNE COUCHE
DE PRIMAIRE

↓

DURCISSEMENT
DU
PRIMAIRE

↓

DEPOT PAR TREMPAGE OU
CENTRIFUGATION DE LA
COUCHE DE REVETEMENT
ANTIABRASION

↓

SECHAGE ET
POSTDURCISSEMENT
DU REVETEMENT
ANTIABRASION

↓

DEPOT D'UN
REVETEMENT
ANTIREFLET

# FIGURE 5

FIGURE 6

FIGURE 7

FIGURE 8

FIGURE 9

EP 1 362 246 B1

FIGURE 10

FIGURE 11

EP 1 362 246 B1

FIGURE 12

FIGURE 13

FIGURE 14

FIGURE 15

FIGURE 16

FIGURE 17

FIGURE 18

$e = \lambda / 4 . n$
(90 nm)

Primaire

0.2 µm

FIGURE 19

## RÉFÉRENCES CITÉES DANS LA DESCRIPTION

**Documents brevets cités dans la description**

- US 4609267 A
- EP 0962789 A
- US 5015523 A
- US 5619288 A
- JP 631411001 B
- JP 63087223 A
- EP 040411 A
- US 5316791 A
- FR 2790317
- WO 9410230 A
- US 4211823 A
- EP 614957 A

**Littérature non-brevet citée dans la description**

- **Owens D.K. ; Wendt R.G.** Estimation of the surface force energy of polymers. *J. APPL. POLYM. SCI,* 1969, vol. 13, 1741-1747